(19) Europäisches Patentamt
European Patent Office
Office européen des brevets

(11) EP 0 914 394 B1

(12) **EUROPÄISCHE PATENTSCHRIFT**

(45) Veröffentlichungstag und Bekanntmachung des Hinweises auf die Patenterteilung:
**11.12.2002 Patentblatt 2002/50**

(21) Anmeldenummer: **97932800.2**

(22) Anmeldetag: **10.07.1997**

(51) Int Cl.[7]: **C09D 167/00**
// (C09D167/00, 133:04)

(86) Internationale Anmeldenummer:
**PCT/EP97/03661**

(87) Internationale Veröffentlichungsnummer:
**WO 98/003598 (29.01.1998 Gazette 1998/04)**

(54) **BESCHICHTUNGSMITTEL AUF BASIS EINES VERZWEIGTEN HYDROXYLGRUPPENHALTIGEN, POLYESTERMODIFIZIERTEN POLYACRYLATHARZES UND SEINE VERWENDUNG IN VERFAHREN ZUR HERSTELLUNG EINER MEHRSCHICHTLACKIERUNG**

COATING AGENT BASED ON A BRANCHED HYDROXYL GROUP-CONTAINING POLYESTER-MODIFIED POLYACRYLATE RESIN AND USE THEREOF

AGENT DE REVETEMENT A BASE DE RESINE POLYACRYLATE RAMIFIEE CONTENANT DES GROUPES HYDROXYLE, MODIFIEE PAR POLYESTER, ET SON UTILISATION POUR REALISER UNE MISE EN PEINTURE MULTICOUCHE

(84) Benannte Vertragsstaaten:
**AT BE CH DE DK ES FR GB IT LI NL SE**

(30) Priorität: **24.07.1996 DE 19629823**

(43) Veröffentlichungstag der Anmeldung:
**12.05.1999 Patentblatt 1999/19**

(73) Patentinhaber: **BASF Coatings AG**
**48165 Münster (DE)**

(72) Erfinder:
- **BORGHOLTE, Harald**
**D-48151 Münster (DE)**
- **RINK, Heinz-Peter**
**D-48153 Münster (DE)**
- **JUNG, Werner-Alfons**
**D-59387 Ascheberg (DE)**
- **BRÜNNEMANN, Michael**
**D-48165 Münster (DE)**

(74) Vertreter: **Fitzner, Uwe, Dr.**
**Dres. Fitzner & Münch**
**Rechts- und Patentanwälte**
**Lintorfer Strasse 10**
**40878 Ratingen (DE)**

(56) Entgegenhaltungen:
**EP-A- 0 158 161**
**EP-A- 0 688 840**
**WO-A-94/22969**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 914 394 B1

## Beschreibung

Gegenstand der vorliegenden Erfindung ist ein Beschichtungsmittel, enthaltend

(A) mindestens ein hydroxylgruppenhaltige Komponente, die aus

(A1) 5 bis 60 Gew.-% mindestens eines Polyesters und
(A2) 40 bis 95 Gew.-% mindestens eines Polyacrylatharzes, das zumindest teilweise in Gegenwart der Komponente (A1) hergestellt worden ist und das erhältlich ist aus:

(a) einem cycloaliphatischen Ester der Methacrylsäure und/oder Acrylsäure oder einem Gemisch aus solchen Monomeren,

(b) einem hydroxylgruppenhaltigen Alkylester der Methacrylsäure und/oder Acrylsäure oder Gemischen aus solchen Monomeren,

(c) einem von (a) und (b) verschiedenen Monomeren mit mindestens zwei polymerisierbaren, olefinisch ungesättigten Doppelbindunge

(d) gegebenenfalls einem von (a), (b) und (c) verschiedenen hydroxylgruppenhaltigen, ethylenisch ungesättigten Monomeren oder einem Gemisch aus solchen Monomeren,

(e) einem von (a), (b), (c) und (d) verschiedenen aliphatischen Ester der Methacryl- und/oder Acrylsäure oder einem Gemisch aus solchen Monomeren,

(f) gegebenenfalls einem von (a), (b), (c), (d) und (e) verschiedenen vinylaromatischen Kohlenwasserstoff oder einem Gemisch aus solchen Monomeren und

(g) gegebenenfalls einem von (a), (b), (c), (d), (e) und (f) verschiedenen weiteren ethylenisch ungesättigten Monomeren oder einem Gemisch aus solchen Monomeren,

und

(B) mindestens ein Vernetzungsmittel.

Die vorliegende Erfindung betrifft außerdem Verfahren zur Herstellung eines mehrschichtigen, schützenden und/oder dekorativen Überzuges auf einer Substratoberfläche sowie die Verwendung der Beschichtungsmittel im Bereich der Autoreparaturlackierung.

## Stand der Technik

Aus der DE-A-40 24 204 sind bereits Beschichtungsmittel bekannt, die als Bindemittel ein hydroxylgruppenhaltiges Polyacrylatharz enthalten, das in Gegenwart eines hydroxylgruppenhaitigen Polyesters hergestellt wurde. Insbesondere wenn diese Beschichtungsmittel bei niedrigen Temperaturen appliziert werden, ist jedoch die Abklebebeständigkeit und die Lösemittelbeständigkeit der resultierenden Beschichtungen verbesserungsbedürftig.

Beschichtungsmittel auf der Basis von hydroxylgruppenhaitigen Polyacrylatharzen und Vernetzungsmitteln sind beispielsweise aus der JP-OS 4-1254 bekannt. Die als Bindemittel eingesetzten hydroxylgruppenhaltigen Polyacrylatharze sind dabei erhältlich aus hydroxylgruppenhaltigen Monomeren, Alkylacrylaten, Alkylmethacrylaten, gegebenenfalls Styrol sowie gegebenenfalls ethylenisch ungesättigten Polymeren. Dabei ist es erfindungswesentlich, daß das Polyacrylatharz unter Verwendung von 4-tert.-Butylcyclohexylacrylat und/oder 4-tert.-Butylcyclohexylmethacrylat als Monomerkomponente hergestellt worden ist. Als hydroxylgruppenhaltiges Monomer wird insbesondere Hydroxyethylacrylat und/oder Hydroxyethylmethacrylat eingesetzt.
Diese aus der JP-OS 4-1254 bekannten Beschichtungsmittel weisen insbesondere bei Verwendung als transparenter Decklack über einer Basislackschicht vor allem den Nachteil auf, daß bei Verwendung von Hydroxyethylacrylat und/oder Hydroxyethylmethacrylat als OH-Monomer Beschichtungen mit einer unzureichenden Haftung auf der Basislackschicht resultieren. Nachteilig bei diesen aus der JP-OS 4-1254 bekannten Beschichtungsmitteln ist ferner die unzureichende Topfzeit der Beschichtungsmittel.

Aus der EP-B-0 158 161 sind hydroxylgruppenhaltige Acrylatcopolymerisate bekannt, entstanden durch Copolymerisation von Acrylatmonomeren mit mindestens zwei olefinisch ungesättigten Doppelbindungen, hydroxylgruppenhaltigen Monomeren und weiteren olefinisch ungesättigten Monomeren, die gemeinsam mit Melaminformaldehydharz als Vernetzungmittel als Überzugsmittel eingesetzt werden können.
Diesen aus der EP-B-0 158 161 bekannten Beschichtungsmitteln ist ebenfalls zueigen, daß sie insbesondere bei Verwendung als transparenter Decklack über einer Basislackschicht den Nachteil aufweisen, daß bei Verwendung von Hydroxyethyl(meth)acrylat als hydroxylgruppenhaltigem Monomer Beschichtungen mit einer unzureichenden Haftung auf der Basislackschicht resultieren und daß die Topfzeit der Beschichtungsmittel unzureichend ist.

In EP-A-0 638 591 werden hydroxylgruppenhaltige Copolymerisate beschrieben, herstellbar durch eine Polymerisation in Substanz, bei der eine Komponente zu Beginn der Polymerisation vorgelegt wird und im weiteren Verlauf mindestens zwei olefinisch ungesättigte Monomere zugefügt werden, von denen mindestens eines mindestens eine Carboxylgruppe enthält und mindestens eines sterisch gehindert ist. Weiterhin wird die Verwendung solcher Copolymerisate in festkörperreichen Beschichtungsmitteln beschrieben.
Wiederum ist die Haftung solcher Beschichtungsmittel gemäß EP-A-0 638 591 auf Basislackschichten unzureichend.

Aus der DE-A-44 07 415 sind Beschichtungsmittel bekannt, die die aus dem bisherigen Stand der Technik resultierenden Aufgaben hervorragend lösen. Solche Beschichtungsmittel enthalten (A) mindestens ein hydroxylgruppenhaltiges Polyacrylatharz, erhältlich aus (a) einem cycloaliphatischen Ester der (Meth)acrylsäure, (b) einem hydroxylgruppenhaltigen Ester der (Meth)acrylsäure, (c) gegebenenfalls einem von (a) und (b) verschiedenen hydroxylgruppenhaitigen, ethylenisch ungesättigten Monomeren, (d) einem von (a), (b) und (c) verschiedenen aliphatischen Ester der (Meth)acrylsäure, (e) gegebenenfalls einem von (a), (b), (c) und(d) verschiedenen vinylaromatischen Kohlenwasserstoff und (f) gegebenenfalls einem von (a), (b), (c), (d) und (e) verschiedenen weiteren ethylenisch ungesättigten Monomeren, und (B) mindestens ein Vernetzungsmittel.

Die Beschichtungsmittel gemäß DE-A-44 07 415 weisen bei Verwendung als transparenter Decklack über einer pigmentierten Basislackschicht eine deutlich verbesserte Haftung zur Basislackschicht und dabei gleichzeitig eine gute Chemikalienbeständigkeit sowie eine gute Witterungsbeständigkeit auf. Die Beschichtungsmittel sind bei niedrigen Temperaturen aushärtbar und so für den Bereich der Autoreparaturelackierung einsetzbar, Selbst bei Härtung der Beschichtungsmittel bei diesen niedrigen Temperaturen härten die Beschichtungsmittel schnell aus, weisen aber gleichzeitig eine ausreichend lange Verarbeitbarkeit auf. Weiterhin weisen die Beschichtungsmittel gemäß DE-A-44 07 415 den Vorteil eines guten Decklackstands auf, zeigen unter den Bedingungen der Autoreparaturlackierung einen sehr guten Verlauf und ein gutes Applikationsverhalten auf und lösen bei Verwendung als Klarlack über einer Basislackschicht diese nur wenig an.
Neuere Forderungen des Markts bedingen allerdings eine gegenüber den Beschichtungsmitteln nach DE-A-44 07 415 nochmalig verbesserte Haftung bei Anwendung der Beschichtungsmittel als Klarlack zur Beschichtung von Basislackschichten sowie eine weiter erhöhte Benzinbeständigkeit und eine verbesserte Polierbarkeit.

## Aufgabe und Lösung

Der vorliegenden Erfindung lag somit die Aufgabe zugrunde, Beschichtungsmittel zur Verfügung zu stellen, die bei Verwendung als transparenter Decklack über einer pigmentierten Basislackschicht zu Beschichtungen mit einer verbesserten Haftung zum Basislack führen und die eine verbesserte Benzinbeständigkeit aufweisen.
Gleichzeitig sollten dabei die resultierenden Beschichtungen eine gute Chemikalienbeständigkeit sowie eine gute Witterungsbeständigkeit aufweisen. Ferner sollten die Beschichtungsmittel für die Autoreparaturlackierung geeignet sein, d.h. sie sollten bei niedrigen Temperaturen von im allgemeinen unter 120 Grad C, bevorzugt unter 80 Grad C, aushärtbar sein. Außerdem sollten die Beschichtungsmittel auch bei diesen niedrigen Temperaturen schnell aushärten (schnelle Staub- und Klebfreiheit sowie schnelle Durchtrocknung), dabei aber eine möglichst lange Verarbeitbarkeit (Topfzeit) aufweisen. Weiterhin sollten die Beschichtungsmittel einen guten Decklackstand aufweisen und bei Verwendung als Klarlack über einer Basislackschicht die darunterliegende Basislackschicht nur möglichst wenig anlösen sowie einen guten Hell-/Dunkeleffekt bei der Aufsicht unter verschiedenen Winkeln zeigen. Schließlich sollten die Beschichtungsmittel einen sehr guten Verlauf zeigen und unter den Bedingungen der Autoreparaturlackierung ein gutes Applikationsverhalten zeigen.

Überraschenderweise wird diese Aufgabe durch ein Beschichtungsmittel der eingangs genannten Art gelöst, das dadurch gekennzeichnet ist, daß die Komponente (A2) eine hydroxylgruppenhaltiges Komponente ist, die erhältlich ist, indem bevorzugt:

(a) 5 bis 80 Gew.-% der Komponente (a),
(b) 10 bis 50 Gew.-% der Komponente (b),
(c) 1 bis 25 Gew.-% der Komponente (c),
(d) 0 bis 25 Gew.-% der Komponente (d),
(e) 5 bis 80 Gew.-% der Komponente (e),

(f) 0 bis 40 Gew.-% der Komponente (f) und
(g) 0 bis 40 Gew.-% der Komponente (g)

zu einem Polyacrylatharz (A2) zumindest teilweise in Gegenwart des Polyesters (A1) polymerisiert werden, wobei die Komponente (A1) zu 5 bis 60 Gew.-% und die Komponente (A2) zu 40 bis 95 Gew.-%, jeweils bezogen auf (A), vorliegt und wobei die Summe der Gewichtsanteile der Komponenten (a) bis (g) stets 100 Gew.-% beträgt und wobei vorzugsweise als Komponente (b) nur Monomere oder Mischungen von Monomeren eingesetzt werden, die bei alleiniger Polymerisation des jeweiligen Monomers ein Polyacrylat- und/oder Polymethacrylatharz mit einer Glasübergangstemperatur von -10 bis +6 Grad C oder von +60 bis 80 Grad C ergeben.

Gegenstand der vorliegenden Erfindung ist außerdem ein Verfahren zur Herstellung eines mehrschichtigen Überzuges auf einer Substratoberfläche unter Verwendung dieser Beschichtungsmittel sowie die Verwendung der Beschichtungsmittel im Bereich der Autoreparaturlackierung.

Es ist überraschend und war nicht vorhersehbar, daß die erfindungsgemäßen Beschichtungsmittel bei Verwendung als transparenter Decklack über einer pigmentierten Basislackschicht eine deutlich verbesserte Haftung zur Basislackschicht aufweisen und dabei gleichzeitig eine gute Benzinbeständigkeit, gute Chemikalienbeständigkeit sowie gute Witterungsbeständigkeit aufweisen. Vorteilhaft ist ferner, daß die Beschichtungsmittel bei niedrigen Temperaturen aushärtbar sind und so für den Bereich der Autoreparaturlackierung einsetzbar sind. Selbst bei Härtung der Beschichtungsmittel bei diesen niedrigen Temperaturen härten die Beschichtungsmittel schnell aus, weisen dabei aber gleichzeitig eine lange Verarbeitbarkeit auf. Weiterhin weisen die erfindungsgemäßen Beschichtungsmittel den Vorteil eines guten Decklackstandes auf und zeigen unter den Bedingungen der Autoreparaturlackierung einen sehr guten Verlauf und ein gutes Applikationsverhalten. Schließlich weisen die erfindungsgemäßen Beschichtungsmittel bei Verwendung als Klarlack über einer Basislackschicht den Vorteil auf, daß sie die Basislackschicht nur wenig anlösen und den Metalleffekt nur sehr gering beeinflußen.

## Durchführung der Erfindung

### Die Bestandteile des Beschichtungsmittels

Im folgenden werden nun die einzelnen Bestandteile des erfindungsgemäßen Beschichtungsmittels näher erläutert.

### Die Komponente (A) des Beschichtungsmittels

### Das Polyesterharz (A1)

Die Polyester (A1) sind bevorzugt erhältlich durch Umsetzung von

(p1) Polycarbonsäuren oder deren veresterungsfähige Derivate, gegebenenfalls zusammen mit Monocarbonsäuren,

(p2) Polyolen, gegebenenfalls zusammen mit Monoolen,

(p3) gegebenenfalls weiteren modifizierenden Komponenten und

(p4) gegebenenfalls einer mit dem Reaktionsprodukt aus (p1), (p2) und gegebenenfalls (p3) reaktionsfähigen Komponente.

Als Beispiele für Polycarbonsäuren, die als Komponente (p1) eingesetzt werden können, seien aromatische, aliphatische und cycloaliphatische Polycarbonsäuren genannt.
Beispiele für geeignete Polycarbonsäuren (p1) sind Phthalsäure, Isophthalsäure, Terephthalsäure, Halogenphthalsäuren, wie Tetrachlor- bzw. Tetrabromphthalsäure, Adipinsäure, Glutarsäure, Acelainsäure, Sebacinsäure, Fumarsäure, Maleinsäure, Trimellithsäure, Pyromellithsäure, Tetrahydrophthalsäure, Hexahydrophthalsäure, 1,2-, 1,3- und 1,4-Cyclohexandicarbonsäure, 4-Methylhexahydrophthalsäure, Endomethylentetrahydrophthalsäure, Tricyclodecandicarbonsäure, Endoethylenhexahydrophthalsäure, Camphersäure, Cyclohexantetracarbonsäure, cyclobutantetracarbonsäure und ähnliche. Die cycloaliphatischen Polycarbonsäuren (p1) können sowohl in ihrer cis- als auch in ihrer trans-Form sowie als Gemisch beider Formen eingesetzt werden. Geeignet sind auch die veresterungsfähigen Derivate der oben genannten Polycarbonsäuren (p1), wie beispielsweise deren ein- oder mehrwertige Ester mit aliphatischen Alkoholen mit 1 bis 4 C-Atomen oder Hydroxyalkoholen mit 1 bis 4 C-Atomen. Außerdem können auch die Anhydride

der oben genannten Polycarbonsäuren (p1) eingesetzt werden, sofern diese existieren.
Gegebenenfalls können gemeinsam mit den Polycarbonsäuren (p1) auch Monocarbonsäuren eingesetzt werden, wie beispielsweise Benzoesäure, tert.-Butylbenzoesäure, Laurinsäure, Isononansäure und Fettsäuren natürlich vorkommender öle. Bevorzugt wird als Monocarbonsäure Isononansäure eingesetzt.

Geeignete Polyolkomponenten (p2) zur Herstellung des Polyesters bzw. Alkydharzes (A1) sind mehrwertige Alkohole, wie Ethylenglykol, Propandiole, Butandiole, Hexandiole, Neopentylglykol, Diethylenglykol, Trimethylpentandiol, Ethylbutylpropandiol, Trimethylolpropan, Ditrimethylolpropan, Trimethylolethan, Glycerin, Pentaerythrit, Dipentaerythrit, Trishydroxyethylisocyanat, Polyethylenglykol, Polypropylenglykol, gegebenenfalls zusammen mit einwertigen Alkoholen, wie beispielsweise Butanol, Octanol, Laurylalkohol, ethoxylierten bzw. propoxylierten Phenolen.

Als Komponente (p3) zur Herstellung der Polyester (A1) geeignet sind insbesondere Verbindungen, die mindestens eine gegenüber den funktionellen Gruppen des Polyesters reaktive Gruppe aufweisen, ausgenommen die als Komponente (p4) genannten Verbindungen. Als modifizierende Komponente (p3) werden bevorzugt Polyisocyanate und/oder Diepoxydverbindungen, gegebenenfalls auch Monoisocyanate und/oder Monoepoxydverbindungen verwendet. Geeignete Komponenten (p3) sind beispielsweise in der DE-A-40 24 204 auf Seite 4, Zeilen 4 bis 9, beschrieben.

Als Komponente (p4) zur Herstellung der Polyester bzw. Alkydharze (A1) geeignet sind Verbindungen, die außer einer gegenüber den funktionellen Gruppen des Polyesters (A1) reaktiven Gruppe noch eine tertiäre Aminogruppe aufweisen, beispielsweise Monoisocyanate mit mindestens einer tertiären Aminogruppe. Bezüglich weiterer Einzelheiten wird auf die DE-A-40 24 204, Seite 4, Zeilen 10 bis 49, verwiesen.

Die Herstellung der Polyester (A1) erfolgt nach den bekannten Methoden der Veresterung (vergleiche verschiedene Standardwerke, wie beispielsweise:

1. Temple C. Patton, Alkyd Resin Technology, Interscience Publishers John Wiley & Sons, New York, London 1962;

2. Dr. Johannes Schreiber, Chemie und Technologie der künstlichen Harze, Wissenschaftliche Verlagsgesellschaft mbH, Stuttgart, 1943;

3. Hans Wagner und Hans-Friedrich Sarx, Lackkunstharze, 4. Auflage, Carl Hanser Velag, München, 1959;

4. Ullmanns Enzyklopädie der technischen Chemie, Band 14, Seiten 80 bis 106, 1963).

Die Umsetzung erfolgt dabei üblicherweise bei Temperaturen zwischen 180 und 280 Grad C, gegebenenfalls in Gegenwart eines geeigneten Veresterungskatalysators, wie beispielsweise Lithiumoctoat, Dibutylzinnoxid, Dibutylzinndilaurat, p-Toluolsulfonsäure und ähnlichen.
Üblicherweise wird die Herstellung der Polyester (A1) in Gegenwart geringer Mengen eines geeigneten Lösungsmittels als Schleppmittel für das Reaktionsprodukt Wasser durchgeführt. Als Schleppmittel werden beispielsweise aromatische Kohlenwasserstoffe, wie insbesondere Xylol, und (cyclo)aliphatische Kohlenwasserstoffe, insbesondere Cyclohexan, eingesetzt.

**Das Polyacrylatharz (A2) und das Bindemittel (A)**

Die als Komponente (A2) in den erfindungsgemäßen Beschichtungsmitteln eingesetzten Polyacrylate weisen OH-Zahlen von 60 bis 180 mg KOH/g, bevorzugt 100 bis 150 mg KOH/g, und Säurezahlen von 0 bis 30 mg KOH/g, bevorzugt 0 bis 15 mg KOH/g, auf, wobei die OH-Zahlen und die Säurezahlen jeweils ohne Berücksichtigung des Polyesteranteils berechnet sind.

Es ist erfindungswesentlich, daß das Polyacrylatharz (A2) zumindest teilweise in Gegenwart des Polyesterharzes (A1) hergestellt worden ist. Vorteilhafterweise werden mindestens 40 Gew.-% und besonders vorteilhafterweise mindestens 50 Gew.-% der Komponente (A2) in Gegenwart der Komponente (A1) hergestellt.
Die gegebenenfalls verbleibende Menge an Komponente (A2) wird der Bindemittellösung bzw. dem Beschichtungsmittel anschließend zugegeben. Dabei ist es möglich, daß dieses bereits polymerisierte Harz die gleiche Monomerbausteinzusammensetzung aufweist wie das in Gegenwart des Polykondensationsharzes aufgebaute Polyadditionsharz. Es kann aber auch ein hydroxylgruppenhaltiges Polyadditions- und/oder Polykondensationsharz mit einer unterschiedlichen Monomerbausteinzusammensetzung zugefügt werden. Außerdem ist es möglich, eine Mischung verschiedener Polyadditionsharze und/oder Polykondensationsharze zuzufügen, wobei gegebenenfalls ein Harz die gleiche Monomerzusammensetzung aufweist wie das in Gegenwart des Polykondensationsharzes aufgebaute Polyadditionsharz.

Das erfindungsgemäß eingesetzte Polyacrylatharz (A2) ist vorzugsweise erhältlich, indem die Komponenten

(a) 5 bis 80 Gew.-%, bevorzugt 5 bis 30 Gew.-%, eines cycloaliphatischen Esters der Methacrylsäure und/oder

Acrylsäure oder eines Gemisches aus solchen Monomeren,

(b) 10 bis 50 Gew.-%, bevorzugt 15 bis 40 Gew.-%, eines hydroxylgruppenhaltigen Alkylesters der Methacrylsäure und/oder Acrylsäure oder eines Gemisches aus solchen Monomeren,

(c) 1 bis 25 Gew.-%, bevorzugt 2 bis 20 Gew.-% eines von (a) und (b) verschiedenen Monomeren mit mindestens zwei polymerisierbaren, olefinisch ungesättigten Doppelbindungen,

(d) 0 bis 25 Gew.-%, bevorzugt 0 bis 15 Gew.-%, eines von (a), (b) und (c) verschiedenen hydroxylgruppenhaltigen, ethylenisch ungesättigten Monomeren oder eines Gemisches aus solchen Monomeren,

(e) 5 bis 80 Gew.-%, bevorzugt 5 bis 30 Gew.-%, eines von (a), (b), (c), (d) und (f) verschiedenen aliphatischen Esters der Methacryl- und/oder Acrylsäure oder eines Gemisches aus solchen Monomeren,

(f) 0 bis 40 Gew.-%, bevorzugt 10 bis 30 Gew.-%, eines von (a), (b), (c), (d), (e) und (g) verschiedenen vinylaromatischen Kohlenwasserstoffes oder eines Gemisches aus solchen Monomeren und

(g) 0 bis 40 Gew.-%, bevorzugt 0 bis 30 Gew.-%, eines von (a), (b), (c), (d), (e) und (f) verschiedenen weiteren ethylenisch ungesättigten Monomeren oder eines Gemisch aus solchen Monomeren,

zumindest teilweise in Gegenwart des Polyesterharzes (A1) zu einem Polyacrylatharz (A2) mit einer OH-Zahl von 60 bis 180, bevorzugt von 100 bis 150 mg KOH/g, polymerisiert werden, wobei die Summe der Gewichtsanteile der Komponenten (a) bis (g) stets 100 Gew.-% beträgt und wobei vorzugsweise als Komponente (b) nur Monomere oder Mischungen von Monomeren eingesetzt werden, die bei alleiniger Polymerisation des jeweiligen Monomers ein Polyacrylat- und/oder Polymethacrylatharz mit einer Glasübergangstemperatur von -10 bis +6 Grad C oder von +60 bis 80 Grad C ergeben.

Die Herstellung der erfindungsgemäß eingesetzten Polyacrylatharze (A2) kann nach den allgemein gut bekannten Polymerisationsverfahren erfolgen. Polymerisationsverfahren zur Herstellung von Polyacrylatharzen sind allgemein bekannt und vielfach beschrieben (vergleiche beispielsweise: Houben-Weyl, Methoden der organischen Chemie, 4. Auflage, Band 14/1, Seiten 24 bis 255 (1961)).

Die erfindungsgemäßen Polyacrylatharze (A2) werden vorzugsweise mit Hilfe eines Lösungspolymerisationsverfahrens hergestellt. Hierbei wird üblicherweise ein organisches Lösemittel bzw. Lösemittelgemisch zusammen mit dem Polyester (A1) vorgelegt und zum Sieden erhitzt. In diese Mischung aus organischem Lösemittel bzw. Lösemittelgemisch und Polyesterharz (A1) werden dann das zu polymerisierende Monomerengemisch (a) bis (g) der Polyacrylatkomponente (A2) sowie ein oder mehrere Polymerisationsinitiatoren und ein oder mehrere Polymerisationsregler kontinuierlich zugegeben.

Die Polymerisation der Monomerkomponenten (a) bis(g) wird vorzugsweise unter Ausschluß von Sauerstoff, z.B. durch Arbeiten in einer Stickstoff-Atmosphäre, durchgeführt. Der Reaktor ist mit entsprechenden Rühr-, Heiz- und Kühleinrichtungen sowie mit einem Rückflußkühler, in dem flüchtige Bestandteile, wie z.B. Styrol, zurückgehalten werden, ausgerüstet. Die Polymerisationsreaktion wird bei Temperaturen von 100 bis 180 Grad C, bevorzugt bei 130 bis 170 Grad C durchgeführt.

Die Polymerisation wird bevorzugt in einem hochsiedenden, organischen, gegenüber den eingesetzten Monomeren inerten Lösemittel durchgeführt. Beispiele für geeignete Lösemittel sind höher substituierte Aromaten, wie beispielsweise Solvent Naphtha®, Schwerbenzol, verschiedene Solvesso®-Typen, verschiedene Shellsol®-Typen und Deasol® sowie höhersiedende aliphatische und cycloaliphatische Kohlenwasserstoffe, wie beispielsweise verschiedene Testbenzine, Mineralterpentinöl, Tetralin und Dekalin sowie verschiedene Ester, wie beispielsweise Ethylglykolacetat, Butylglykolacetat, Ethylglykoldiacetat und ähnliche.

Als Polymerisationsinitiatoren werden vorzugsweise freie Radikale bildende Initiatoren eingesetzt. Initiatorart und - menge werden üblicherweise so gewählt, daß bei der Polymerisationstemperatur während der Zulaufphase ein möglichst konstantes Radikalangebot vorliegt.

Für die Herstellung der Polyacrylatharze (A2) sind beispielsweise tert.-Butylgruppen enthaltende Initiatoren, wie z.B. Di.-tert.-butylperoxid, tert.-Butylhydroperoxid, 2,2-Di-tert.-butylperoxybutan und 1,3-Bis-(tert.-butylperoxyisopropyl-)-benzol, Dibenzoylperoxid, tert.-Butylperoxy-2-ethylhexanoat, tert.-Butylperoxy-3,5,5-trimethylhexanoat, tert.-Butylperoxypivalat, tert.-Butylperacetat, tert.-Butylcumolperoxid, weitere Peroxide, wie Dicumylperoxid, Cumylperoxid, tert. -Amylperoxybenzoat, tert.-Amylperoxy-2-ethylhexanoat, Diacylperoxide, wie z.B. Diacetylperoxid, Peroxyketale, 2,2-Di-(tert.-amylperoxy-)propan, Ethyl-3,3-di-(tert.-amylperoxy-)-butyrat und thermolabile hochsubstituierte Ethanderivate, beispielsweise auf Basis silylsubstituierter Ethanderivate und auf Basis Benzpinakol geeignet. Weiterhin können auch aliphatische Azoverbindungen, wie beispielsweise Azoisovaleronitril und Azobiscyclohexannitril, eingesetzt werden.
Die Initiatormenge beträgt in den meisten Fällen 0,1 bis 8 Gew.-%, bezogen auf die zu verarbeitende Monomerenmenge, sie kann gegebenenfalls aber auch höher liegen. Der Initiator, gelöst in einem Teil des für die Polymerisation eingesetzten Lösungsmittels, wird allmählich während der Polymerisationsreaktion zudosiert. Bevorzugt dauert der Initiatorzulauf etwa 0,5 bis 2 Stunden länger als der Monomerenzulauf, um so auch eine gute Wirkung während der Nachpolymerisationsphase zu erzielen. Werden Initiatoren mit nur einer geringen Zerfallsrate unter den vorliegenden Reaktionsbedingungen eingesetzt, so ist es auch möglich, den Initiator vorzulegen.

Die gegebenenfalls anwesenden Polymerisationsregler werden in Mengen von bevorzugt mindestens 0,5 Gew.-%, besonders bevorzugt mindestens 2,5 Gew.-%, bezogen auf das Gesamtgewicht der Monomeren, eingesetzt, solchermaßen daß das Polyacrylat (A) zu einem vorvernetzten, nicht gelierten Produkt copolymerisiert wird. Als Polymerisationsregler werden beispielsweise Mercaptogruppen enthaltende Verbindungen, wie beispielsweise Mercaptane oder Thioglykolsäureester, oder Halogenkohlenwasserstoffe eingesetzt.

Die Säurezahl des Polyacrylatharzes (A2) liegt üblicherweise zwischen 0 und 30 mg KOH/g, bevorzugt zwischen 0 und 15 mg KOH/g. Die Säurezahl der erfindungsgemäß eingesetzten Polyacrylatharze kann vom Fachmann durch Einsatz entsprechender Mengen der Komponente (g) eingestellt werden. Analoges gilt für die Einstellung der Hydroxylzahl. Sie ist über die Menge an eingesetzter Komponente (b) und (d) steuerbar.

Beispiele für als Komponente (a) geeignete cycloaliphatische Ester der Acrylsäure und/oder Methacrylsäure sind Cyclohexylacrylat, Cyclohexylmethacrylat, 4-tert.-Butylcyclohexylacrylat, 4-tert.-Butylcyclohexylmethacrylat, Isobornylacrylat und Isobornylmethacrylat. Besonders bevorzugt wird als Komponente (a) 4-tert.-Butylcyclohexylacrylat und/oder 4-tert.-Butylcyclohexylmethacrylat eingesetzt.

Es ist bevorzugt, daß als Komponente (b) nur Monomere oder Mischungen von Monomeren eingesetzt werden, die bei alleiniger Polymerisation des jeweiligen Monomers ein Polyacrylatund/oder Polymethacrylatharz mit einer Glasübergangstemperatur von -10 bis +6 Grad C, oder von +60 bis 80 Grad C ergeben. Dies bedeutet, daß bei Verwendung von Mischungen verschiedener Monomerer als Komponente (b) selbstverständlich auch solche Mischungen geeignet sind, die bei alleiniger Polymerisation der Komponente (b) ein Polyacrylat- und/oder Polymethacrylatharz mit einem $T_G$-Wert außerhalb dieser für die einzelnen Monomeren angegebenen Bereiche ergeben.
Die Glasübergangstemperatur kann vom Fachmann unter Zuhilfenahme der Formel

$$\frac{1}{T_G} = \sum_{n=1}^{n=x} \frac{W_n}{T_{Gn}}$$

$T_G$ = Glasübergangstemperatur des Polymeren
x = Anzahl der verschiedenen einpolymerisierten Monomere,
$W_n$ = Gewichtsanteil des n-ten Monomers
$T_{Gn}$ = Glasübergangstemperatur des Homopolymers aus dem n-ten Monomer

näherungsweise berechnet werden.

Bevorzugt ist die Komponente (b) ausgewählt aus 3-Hydroxypropylmethacrylat, 3-Hydroxypropylacrylat, 2-Hydroxypropylmethacralat und/oder 2-Hydroxypropylacrylat.

Als weitere hydroxylgruppenhaltige Monomere (Komponente (d)) kommen Hydroxyalkylester alpha,beta-ungesättigter Carbonsäuren mit primären oder sekundären Hydroxylgruppen in Frage. Ist eine hohe Reaktivität des Acrylatcopolymerisats erwünscht, können ausschließlich Hydroxyalkylester mit primären Hydroxylgruppen eingesetzt werden; soll das Polyacrylat weniger reaktiv sein, können ausschließlich Hydroxyalkylester mit sekundären Hydroxylgruppen eingesetzt werden. Selbstverständlich können auch Mischungen von Hydroxyalkylestern mit primären Hxydroxylgruppen und Hydroxyalkylestern mit sekundären Hydroxylgruppen verwendet werden. Beispiele für geeignete Hydroxyalkylester alpha,beta-ungesättigter Carbonsäuren mit primären Hydroxylgruppen sind Hydroxybutylacrylat, Hydroxyamylacrylat, Hydroxyhexylacrylat, Hydroxyoctylacrylat und die entsprechenden Methacrylate. Als Beipiele für verwendbare Hydroxyalkylester mit einer sekundären Hydroxylgruppe seien 2-Hydroxybutylacrylat, 3-Hydroxybutylacrylat und die entsprechenden Methacrylate genannt. Selbstverständlich können jeweils auch die entsprechenden Ester anderer alpha,beta-ungesättigter Carbonsäuren, wie z.B. der trotonsäure und der Isocrotonsäure eingesetzt werden.

Vorteilhaft kann die Komponente (d) zumindest teilweise ein Umsetzungsprodukt aus einem Mol Hydroxyethylacrylat und/oder Hydroxyethylmethacrylat und durchschnittlich zwei Mol epsilon-Caprolacton sein. Als Komponente (d) kann zumindest teilweise auch ein Umsetzungsprodukt aus Acrylsäure und/oder Methacrylsäure mit der äquivalenten Menge eines Glycidylesters einer Carbonsäure mit einem tertiären alpha-Kohlenstoffatom eingesetzt werden. Glycidylester stark verzweigter Monocarbonsäuren sind unter dem Handelsnamen "Cardura®" erhältlich. Die Umsetzung der Acrylsäure oder Methacrylsäure mit dem Glycidylester einer Carbonsäure mit einem tertiären alpha-Kohlenstoffatom kann vor, während oder nach der Polymerisationsreaktion erfolgen.

Als Komponente (c) werden bevorzugt Verbindungen der allgemeinen Formel I:

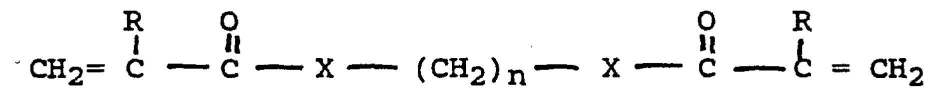

(I)

mit:

R für H oder Methyl,
X für O, NH, $NR_1$ mit $R_1$=C1- bis C10-Alkyl, oder S und
n für 2 bis 8,

eingesetzt.
Beispiele für derartige Verbindungen sind Hexandioldiacrylat, Hexandioldimethacrylat, Glykoldiacrylat, Glykoldimethacrylat, Butandioldiacrylat, Butandioldimethacrylat und ähnliche Verbindungen.
Weiterhin kann die Komponente (c) vorteilhaft ein Umsetzungsprodukt aus einer Carbonsäure mit einer polymerisierbaren, olefinisch ungesättigten Doppelbindung mit Glycidylacrylat und/oder Glycidylmethacrylat oder eine mit einem ungesättigten Alkohol veresterte Poly- oder Monocarbonsäure sein.

Als Komponente (c) können ferner Aromaten mit mindestens 2 Substiuenten, die polymerisierbare, olefinisch ungesättigte Gruppen aufweisen, eingesetzt werden, wie vorzugsweise Divinylbenzol.
Weiterhin können Diallylverbindungen als Komponente (c) verwendet werden.
Ferner kann vorteilhaft als Komponente (c) ein Umsetzungsprodukt eines Polyisocyanats mit einem ungesättigten Alkohol oder mit einem ungesättigten Amin verwendet werden. Als Beispiel hierfür sei das Reaktionsprodukt aus 1 Mol Hexamethylendiisocyanat und 2 Mol Allylalkohol genannt.
Eine weitere vorteilhafte Komponente (c) ist ein Diester von Polyethylenglykol und/oder Polypropylenglykol mit einem mittleren Molekulargewicht von weniger als 1500, vorzugsweise weniger als 1000 Dalton, mit Acrylsäure und/oder Methacrylsäure. Erfindungsgemäß können als Komponente (c) auch Acrylate mit mehr als zwei ethylenisch ungesättigten Doppelbindungen eingesetzt werden, wie beispielsweise Trimethylolpropantriacrylat, Trimethylolpropantrimethacrylat, Pentaerythrittetraacrylat oder Pentaerythrittetramethacrylat. Selbstverständlich können auch Kombinationen dieser mehrfach ungesättigten Monomeren verwendet werden.

Die erfindungsgemäß eingesetzten Monomeren (e) werden bevorzugt so ausgewählt, daß bei alleiniger Polymerisation der Komponente (e) ein Polyacrylat- und/oder Polymethacrylatharz mit einer Glasübergangstemperatur von -70 bis 120 Grad C erhalten wird.
Beispiele für als Komponente (e) geeignete Monomere sind Methyl(meth)acrylat, Ethyl(meth)acrylat, Butyl(meth)acrylat, Isopropyl(meth)acrylat, Isobutyl(meth)acrylat, Pentyl(meth)acrylat, Isoamyl(meth)acrylat, Hexyl(meth)acrylat, 2-Ethylhexyl(meth)acrylat, Furfuryl(meth)acrylat, Octyl(meth)acrylat, 3,5,5-Trimethylhexyl(meth)acrylat, Decyl(meth) acrylat, Lauryl(meth)acrylat, Hexadecyl(meth)acrylat, Octadecyl(meth)-acrylat, Stearyl(meth)acrylat und Ethyltriglykol (meth)-acrylat.

Als Komponente (f) geeignet sind vinylaromatische Verbindungen. Vorzugsweise enthält die Komponente (f) 8 bis 9 Kohlenstoffatome je Molekül. Beispiele für geeignete Verbindungen sind Styrol, Vinyltoluole, alpha-Methylstyrol, Chlorstyrole, o-, m- oder p-Methylstyrol, 2,5-Dimethylstyrol, p-Methoxystyrol, p-tert.-Butylstyrol, p-Dimethylaminostyrol, p-Acetamidostyrol und m-Vinylphenol. Bevorzugt werden Vinyltoluole sowie insbesondere Styrol eingesetzt.

Beispiele für als Komponente (g) geeignete Verbindungen sind ungesättigte Carbonsäuren, wie z.B. Acryl- und/oder Methacrylsäure, Maleinsäure, Fumarsäure, Crotonsäure oder Isocrotonsäure, sowie die Anhydride der genannten Säuren, Alkoxyethylacrylate, Aryloxyethylacrylate und die entsprechenden Methacrylate, wie z. B. Butoxyethyl (meth)acrylat und Phenoxyethyl(meth)acrylat sowie Methacrylnitril und Acrylnitril sowie Alkylester von anderen ethylenisch ungesättigten Carbonsäuren, wie z.B. Alkylester der Croton- und Isocrotonsäure sowie polymerisierbare Vinylether und Vinylester.

Es ist bevorzugt, daß der Bindemittelkomponente (A) nach ihrer Herstellung 0,1 bis 1 Gew.-%, bevorzugt 0,4 bis 0,9 Gew.-%, mindestens einer aromatischen Mono- und/oder Polycarbonsäure und/oder mindestens eines Anhydrids einer aromatischen Polycarbonsäure zugesetzt wird. Die Menge an zugesetzter Säure bzw. Anhydrid ist dabei bezogen auf das Gewicht des hydroxylgruppenhaltigen Bindemittels (A), berechnet als Festharz, das heißt ohne Lösemittelanteil. Bevorzugt werden dabei Phthalsäureanhydrid und Halbester der Phthalsäure, Benzoesäure und/oder alkyl- und/oder alkoxy-substituierte Benzoesäure zugesetzt. Besonders bevorzugt wird Benzoesäure zugesetzt. Die Zugabe der Säure erfolgt bevorzugt bei einer Temperatur von 20 bis 120 Grad C, besonders bevorzugt bei einer Temperatur von 40 bis 100 Grad C. Die Zugabe des Anhydrids erfolgt bevorzugt bei einer Temperatur von 100 bis 180 Grad C, besonders bevorzugt bei einer Temperatur von 130 bis 170 Grad C. Die Säure bzw. das Anhydrid kann dabei dem fertigen Beschichtungsmittel, das heißt nach Zusatz von Pigmenten, Füll- und Hilfsstoffen sowie Vernetzungsmittel zugesetzt werden. Bevorzugt wird die Säure bzw. das Anhydrid aber dem Acrylatharz (A2) zugesetzt und möglichst homogen verteilt.

Die erfindungsgemäßen Beschichtungsmittel können ferner gegebenenfalls ein oder mehrere weitere hydroxylgruppenhaltige Harze enthalten. Beispielsweise können sie weitere, von den Bestandteilen (A1) und (A2) der erfindungsgemäßen Bindemittel-Komponente (A) verschiedene, hydroxylgruppenhaltige Acrylatharze und/oder Polykondensationsharze enthalten. Üblicherweise werden diese weiteren Bindemittel in einer Menge von 0 bis 25 Gew.-%, bevorzugt von 0 bis 20 Gew.-%, jeweils bezogen auf das Gesamtgewicht des Beschichtungsmittels und bezogen auf den Festkörpergehalt des Bindemittels, eingesetzt.

Beispiele für geeignete weitere Bindemittel sind beispielsweise die im Handel unter den Namen Macrynal® SM 510 und SM 513 der Firma Hoechst erhältlichen Polyacrylatharze sowie die in der Deutschen Patentanmeldung DE-A-40 24 204 beschriebenen, in Gegenwart eines Polyesters hergestellten hydroxylgruppenhaltigen Polyacrylatharze. Wegen Einzelheiten sei auf die DE-A-40 24 204, insbesondere die Seite 3, Zeile 18, bis Seite 7, Zeile 53, verwiesen.

Als weiteres Bindemittel geeignet ist beispielsweise auch ein hydroxylgruppenhaltiges Polyacrylatharz, das erhältlich ist, indem

(m1) 10 bis 51 Gew.-% einer Mischung aus

(m11) einem oder mehreren Monomeren, ausgewählt aus der Gruppe 4-Hydroxy-n-butylacrylat und/oder 4-Hydroxy-n-butylmethacrylat und/oder 3-Hydroxy-n-butylacrylat und/oder 3-Hydroxy-n-butylmethacrylat und

(m12) einem oder mehreren Monomeren, ausgewählt aus der Gruppe 3-Hydroxy-n-propylacrylat und/oder 3-Hydroxy-n-propylmethacrylat und/oder 2-Hydroxy-n-propylacrylat und/oder 2-Hydroxy-n-propylmethacrylat,

(m2) 0 bis 20 Gew.-% eines von (m1) verschiedenen hydroxylgruppenhaitigen Esters der Acrylsäure oder der Methacrylsäure mit mindestens 5 C-Atomen im Alkoholrest oder eines Gemisches aus solchen Monomeren,

(m3) 28 bis 85 Gew.-% eines von (m1) und (m2) verschiedenen aliphatischen oder cycloaliphatischen Esters der Acrylsäure oder der Methacrylsäure mit mindestens 4 C-Atomen im Alkoholrest oder eines Gemisches aus solchen Monomeren,

(m4) 0 bis 25 Gew.-% eines von (m1), (m2) und (m3) verschiedenen vinylaromatischen Kohlenwasserstoffs oder eines Gemisches aus solchen Monomeren,

(m5) 0 bis 5 Gew.-% einer ethylenisch ungesättigten Carbonsäure oder einer Mischung aus ethylenisch ungesättigten Carbonsäuren und

(m6) 0 bis 20 Gew.-% eines von (m1), (m2), (m3), (m4) und (m5) verschiedenen ethylenisch ungesättigten Monomeren oder eines Gemisches aus solchen Monomeren

zu einem Polyacrylatharz mit einer Hydroxylzahl von 60 bis 200 mgKOH/g, einer Säurezahl von 0 bis 35 mgKOH/g und einem zahlenmittleren Molekulargewicht von 1000 bis 5000 polymerisiert werden, wobei die Summe der Gewichtsanteile der Komponenten (m1) bis (m6) jeweils 100 Gew.-% beträgt.

Beispiele für als Monomerkomponenten (m1) bis (m6) geeignete Verbindungen sind die bei der Beschreibung des Acrylatharzes (A2) aufgeführten Verbindungen.

**Das Vernetzungsmittel (B)**

Bei der als Vernetzungsmittel (B) bevorzugten Polyisocyanatkomponente handelt es sich um beliebige organische Polyisocyanate mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessern. Als Zusatzmittel

geeignete Lösemittel für die Polyisocyanate sind beispielsweise Ethoxyethylpropionat, Butylacetat und ähnliches.

Beispiele für geeignete Isocyanate sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Ann. Chem. 562, 75 bis 136, beschrieben. Beispielsweise geeignet sind 1,2-Ethylendiisocyanat, 1,4-Tetramethylendiisocyanat, 1,6-Hexamethylendiisocyanat, 2,2,4- bzw. 2,4,4-Trimethyl-1,6-hexamethylendiisocyanat, 1,12-Dodecandiisocyanat, omega,omega'-Diisocyanatodipropylether, Cyclobutan-1,3-diisocyanat, Cyclohexan-1,3- und -1,4-diisocyanat, 2,2- und 2,6-Diisocyanato-1-methylcyclohexan, 3-Isocyanatomethyl-3,5,5-trimethylcyclohexylisocyanat("Isophorondiisocyanat"), 2,5- und 3,5-Bis(isocyanatomethyl)-8-methyl-1,4-methan-decahydronaphthalin, 1,5-, 2,5-, 1,6- und 2,6-Bis(isocyanatomethyl)-4,7-methanhexahydroindan, 1,5-, 2,5-, 1,6- und 2,6-Bis(isocyanato)-4,7-methanhexahydroindan, Dicyclohexyl-2,4'- und -4,4'-diisocyanat, 2,4- und 2,6-Hexahydrotoluylendiisocyanat, Perhydro-2,4'- und -4,4'-diphenylmethandiisocyanat, ω,ω'-Diisocyanato-1,4-diethylbenzol, 1,3- und 1,4-Phenylendiisocyanat, 4,4'-Diisocyanatodiphenyl, 4,4'-Diisocyanato-3,3'-dichlordiphenyl, 4,4'-Diisocyanato-3,3'-dimethoxydiphenyl, 4,4'-Diisocyanato-3,3'-dimethyldiphenyl, 4,4'-Diisocyanato-3,3'-diphenyl-diphenyl, 2,4'- und 4,4'-Diisocyanato-diphenylmethan, Naphthylen-1,5-diisocyanat, Toluylendiisocyanate, wie 2,4-bzw. 2,6-Toluylendiisocyanat, N,N'-(4,4'-Dimethyl-3,3'-diisocyanatodiphenyl)-uretdion, m-Xylylendiisocyanat, Dicyclohexylmethandiisocyanat, Tetramethylxylylendiisocyanat, aber auch Triisocyanate, wie 2,4,4'-Triisocyanatodiphenylether, 4,4',4''-Triisocyanatotriphenylmethan.

Bevorzugt werden, gegebenenfalls in Kombination mit den obengenannten Polyisocyanaten, Isocyanuratgruppen und/oder Biuretgruppen und/oder Allophanatgruppen und/oder Urethangruppen und/oder Harnstoffgruppen aufweisende Polyisocyanate eingesetzt. Urethangruppen aufweisende Polyisocyanate werden beispielsweise durch Umsetzung eines Teils der Isocyanatgruppen mit Polyolen, wie z.B. Trimethylolpropan und Glycerin, erhalten.

Vorzugsweise werden aliphatische oder cycloaliphatische Polyisocyanate, insbesondere Hexamethylendiisocyanat, dimerisiertes und trimerisiertes Hexamethylendiisocyanat, Isophorondiisocyanat, Dicyclohexylmethan-2,4'-diisocyanat oder Dicyclohexylmethan-4,4'-diisocyanat oder Mischungen aus diesen Polyisocyanaten eingesetzt. Ganz besonders bevorzugt werden Gemische aus Uretdion- und/oder Isocyanuratgruppen und/oder Allophanatgruppen aufweisenden Polyisocyanaten auf Basis von Hexamethylendiisocyanat, wie sie durch katalytische Oligomerisierung von Hexamethylendiisocyanat unter Verwendung von geeigneten Katalysatoren entstehen, eingesetzt. Die Polyisocyanatkomponente (B) kann im übrigen auch aus beliebigen Gemischen der beispielhaft genannten Polyisocyanate bestehen.

Die Menge des bevorzugt eingesetzten Vernetzers (B) wird so gewählt, daß das Verhältnis der Isocyanatgruppen des Vernetzers zu den Hydroxylgruppen der Bindemittelkomponente im Bereich von 1 : 3 bis 3 : 1 liegt. Üblicherweise enthalten die erfindungsgemäßen Beschichtungsmittel 15 bis 50 Gew.-% des polyestermodifizierten Acrylatharzes (A), 0 bis 25 Gew.-% der weiteren Bindemittelkomponente und 7 bis 50 Gew.-% des Vernetzungsmittels (B), jeweils bezogen auf das Gesamtgewicht des Beschichtungsmittels und bezogen auf den Festkörpergehalt der Bindemittel- und Vernetzerkomponenten.

**Weitere Komponenten des erfindungsgemäßen Beschichtungsmittels**

Die erfindungsgemäßen Beschichtungsmittel enthalten ferner ein oder mehrere organische Lösungsmittel. Diese Lösungsmittel werden üblicherweise in Mengen von 20 bis 70 Gew.-%, bevorzugt von 30 bis 60 Gew.-%, jeweils bezogen auf das Gesamtgewicht des Beschichtungsmittels, eingesetzt.Beispiele für geeignete Lösungsmittel sind höher substituierte Aromaten, wie z.B. Solvent Naphtha®, Schwerbenzol, verschiedene Solvesso®-Typen, verschiedene Shellsol®-Typen und Deasol® sowie höhersiedende aliphatische und cycloaliphatische Kohlenwasserstoffe, wie z.B. verschiedene Testbenzine, Mineralterpentinöl, Tetralin und Dekalin sowie verschiedene Ester, wie z.B. Ethylglykolacetat, Butylglykolacetat, Ethyldiglykolacetat und ähnliche.

Die erfindungsgemäßen Beschichtungsmittel können außerdem übliche Hilfs- und Zusatzstoffe in üblichen Mengen, bevorzugt 0,01 bis 10 Gew.-%, bezogen auf das Gesamtgewicht des Beschichtungsmittel, enthalten. Beispiele für geeignete Hilfs- und Zusatzstoffe sind Verlaufsmittel, wie Silikonöle, Weichmacher, wie Phosphorsäureester und Phthalsäureester, viskositätskontrollierende Zusätze, Mattierungsmittel, UV-Absorber, Lichtschutzmittel und gegebenenfalls Füllstoffe.

Ferner können die erfindungsgemäßen Beschichtungsmittel noch übliche Pigmente in üblichen Mengen, bevorzugt 0 bis 40 Gew.-%, bezogen auf das Gesamgewicht des Beschichtungsmittel, enthalten. Beispiele für geeignete Pigmente sind organische und anorganische Farbpigmente sowie Metall- und/oder Effektpigmente.

**Die Herstellung und die Verwendung der Beschichtungsmittel**

Die Herstellung der Beschichtungsmittel erfolgt in bekannter Weise duch Mischen und gegebenenfalls Dispergieren der einzelnen Komponenten.

Diese Beschichtungsmittel können durch Spritzen, Fluten, Tauchen, Walzen, Rakeln oder Streichen auf ein Substrat in Form eines Films aufgebracht werden, wobei der Film anschließend zu einem festhaftenden Überzug

gehärtet wird.

Die Aushärtung dieser Beschichtungsmittel erfolgt üblicherweise bei Raumtemperatur oder leicht erhöhter Temperatur, vorteilhafterweise bei Temperaturen unterhalb von 120 Grad C, bevorzugt bei Temperaturen unterhalb von 80 Grad C. Die Beschichtungsmittel können aber auch unter Einbrennbedingungen, das heißt bei Temperaturen von mindestens 120 Grad C, gehärtet werden.

Als Substrate eignen sich insbesondere Metalle sowie Holz, Kunststoff, Glas und ähnliche.Aufgrund der kurzen Härtungszeiten und niedrigen Härtungstemperaturen werden die erfindungsgemäßen Beschichtungsmittel bevorzugt für die Autoreparaturlackierung, die Lackierung von Großfahrzeugen und LKW-Aufbauten verwendet. Sie können aber - je nach eingesetztem Vernetzer - auch für die Automobilserienlackierung eingesetzt werden. Desweiteren eignen sie sich als pigmenthaltiger Unidecklack. Sie werden aber bevorzugt als Klarlack, insbesondere über einer Metallic-Basislackschicht oder einer Uni-Basislackschicht, eingesetzt.

Gegenstand der vorliegenden Erfindung ist daher auch ein Verfahren zur Herstellung eines mehrschichtigen schützenden und/oder dekorativen Überzuges auf einer Substratoberfläche, bei dem

(1) ein pigmentierter Basislack auf die Substratoberfläche aufgebracht wird,
(2) aus dem in Stufe (1) aufgebrachten Basislack ein Polymerfilm gebildet wird,
(3) auf die so erhaltene Basisschicht ein transparenter Decklack, der

(A) eine hydroxylgruppenhaltige Komponente, sowie
(B) ein Vernetzungsmittel
enthält, aufgebracht wird und anschließend

(4) Basislackschicht und Decklackschicht zusammen gehärtet werden,

dadurch gekennzeichnet, daß als Decklack das erfindungsgemäße Beschichtungsmittel eingesetzt wird.

Die in diesem Verfahren eingesetzten Basislacke sind bekannt und brauchen daher nicht näher erläutert zu werden. Beispiele für geeignete Basislacke sind auch die in der DE-A-41 10 520, der DE-A-40 09 000, der DE-A-40 24 204, der EP-A-355 433, der DE-A-35 45 618, der DE-A-38 13 866 und der DE-A-42 32 717 beschriebenen Basislacke.

Geeignet sind außerdem die in der DE-A-43 27 416 beschriebenen Basislacke, die dadurch gekennzeichnet sind, daß sie einen hydroxylgruppenhaltigen Polyester mit einem gewichtsmittleren Molekulargewicht Mw von 40.000 - 200.000 Dalton und eine Uneinheitlichkeit Mw/Mn > 8 enthalten und daß zur Herstellung des Polyesters mindestens 50 Gew.-% aromatische Dicarbonsäuren oder deren veresterungsfähige Derivate eingesetzt worden sind, wobei aber der Gehalt an Phthalsäureanhydrid maximal 80 Gew.-% beträgt und wobei die Gew.-%-Angaben jeweils auf das Gesamtgewicht der zur Herstellung des Polyesters eingesetzten Säurekomponenten bezogen sind.

Die erfindungsgemäßen Beschichtungsmittel zeichnen sich insbesondere durch eine gute Haftung auf der Basislackschicht, eine gute Kratzfestigkeit und hohe Härte der resultierenden Beschichtungen aus. Daneben weisen die Beschichtungsmittel eine schnelle Trocknung bei gleichzeitig langer Verarbeitbarkeit (Topfzeit) aus. Weiterhin zeigen die resultierenden Beschichtungen, insbesondere im Fall der Klarlackbeschichtungen, gute mechanische Eigenschaften, wie beispielsweise eine gute Glanzhaltung, eine gute Fülle und einen guten Verlauf.

Die Erfindung wird nun anhand von Ausführungsbeispielen näher erläutert. Alle Angaben über Teile und Prozente sind dabei Gewichtsangaben, falls nicht ausdrücklich etwas anderes festgestellt wird.

## Beispiele

### 1. Herstellung der Polyesterkomponente A1

### 1.1. Herstellung eines Polyesterharzes A11

In einen 41-Polykondensationsreaktor mit Rührer, dampfbeheizter Kolonne und Wasserabscheider werden 1229 Teile Trimethylolpropan, 832 Teile Isononansäure, 1295 Teile 1,4-Cyclohexandicarbonsäure und 140 Teile Xylol gegeben und langsam aufgeheizt. Es wird bei einer Temperatur von maximal 202 Grad C bis zu einer Säurezahl von 10 mg KOH/g und einer Viskosität von 4,2 dPas (60 %ig in Xylol) kondensiert. Anschließend wird gekühlt und bei 130 Grad C mit 1427 Teilen Shellsol® A angelöst sowie weiter auf Raumtemperatur gekühlt.

Der so erhaltene Polyester A11 hat einen Festkörper von 63,2%, eine Säurezahl von 10,3 mg KOH/g, eine (theoretische) OH-Zahl von 143,1 mg KOH/g und eine Viskosität von 16,0 dPas (original). Das zahlenmittlere Molekulargewicht Mn beträgt 1500 Dalton, das gewichtsmittlere Molekulargewicht Mw beträgt 3500 Dalton und die Uneinheitlichkeit Mw/Mn beträgt 2,3 (jeweils gelpermeationschromatographisch bestimmt gegen Polystyrol-Standard).

### 1.2. Herstellung eines Polyesterharzes A12

In einen 41-Polykondensationsreaktor mit Rührer, dampfbeheizter Kolonne und Wasserabscheider werden 419 Teile Trimethylolpropan, 325 Teile Neopentylglykol, 805 Teile Hydroxypivalinsäureneopentylglykolester, 315 Teile Isophthalsäure, 642 Teile Hexahydrophthalsäureanhydrid, 179 Teile Adipinsäure, 0,8 Teile Katalysator (Fascat® 4100 der Firma Atochem) und 104 Teile Xylol gegeben und langsam aufgeheizt. Es wird bei einer Temperatur von maximal 208 Grad C bis zu einer Säurezahl von 4,7 mg KOH/g und einer Viskosität von 1,2 dPas (60 %ig in Xylol) kondensiert. Anschließend wird gekühlt und bei 130 Grad C mit 730 Teilen Shellsol® A angelöst sowie weiter auf Raumtemperatur gekühlt.
Der so erhaltene Polyester A12 hat einen Festkörper von 75,0 %, eine Säurezahl von 4,7 mg KOH/g, eine (theoretische) OH-Zahl von 204,1 mg KOH/g und eine Viskosität von 3,5 dPas (60 %ige Lösung in Shellsol® A). Das zahlenmittlere Molekulargewicht Mn beträgt 1100 Dalton, das gewichtsmittlere Molekulargewicht Mw beträgt 2600 Dalton und die Uneinheitlichkeit Mw/Mn beträgt 2,36 (jeweils gelpermeationschromatographisch bestimmt gegen Polystyrol-Standard).

### 2. Herstellung der erfindungsgemäßen polyestermodifzierten hydroxylgruppenhaltigen Bindemittel-Komponente A sowie einer polyestermodifizierten Bindemittel-Komponente V (ohne Monomer (c) im Polyacrylat) als Vergleichsbeispiel

Die Herstellung der erfindungsgemäßen hydroxylgruppenhaltigen polyestermodifizierten Komponente A sowie der polyestermodifizierten Bindemittel-Komponente V als Vergleich erfolgt jeweils in einem 4l-Edelstahlpolymerisationskessel mit Rührer, Rückflußkühler, einem Monomerenzulauf und einem Initiatorzulauf. Die jeweils in der Tabelle 1 angegebenen Komponenten werden eingewogen und dann die Vorlage auf 145 bis 152 Grad C aufgeheizt.
Mit dem Start aller Zuläufe wird gleichzeitig begonnen, innerhalb von 4 Stunden wird der Monomerenzulauf gleichmäßig zudosiert, innerhalb von 4,5 Stunden wird der Initiatorzulauf gleichmäßig zudosiert. Während der Polymerisation wird die Temperatur im Reaktor auf 145 bis 152 Grad C gehalten.
Danach wird noch 2 Stunden nachpolymerisiert. Die so erhaltene Acrylatharzlösung hat einen Festkörpergehalt von 70 %. Anschließend wird die Temperatur auf 110 Grad C gesenkt und das Acrylatharz mit Butylacetat auf 60 % Festkörpergehalt angelöst.
In die Vorlage werden die jeweils in der Tabelle 1 angegebenen Mengen des Polyesterharzes A11 oder A12 sowie die in der Tabelle 1 angegebene Menge an Shellsol® A eingewogen.
In den Monomerenzulauf werden die jeweils in der Tabelle 1 angegebenen Mengen Styrol, Methylmethacrylat, Hexandiol(meth)acrylat, 4-tert.-Butylcyclohexylacrylat, Butylmethacrylat, Hyroxypropylmethacrylat, sowie jeweils die angegebenen Mengen Triisodecylphosphit und Mercaptoethanol eingewogen.
In den Initiatorzulauf werden bei der Herstellung der erfindungsgemäßen Bindemittel-Komponente A 3,13 Teile tert. -Butylperoxyethylhexanoat und5,53 Teile Shellsol® A eingewogen.
In den Initiatorzulauf werden bei der Herstellung der Bindemittel-Komponente V 1,17 Teile tert.-Butylcumylhydroperoxid und 5,23 Teile Shellsol® A (handelsübliches, aromatisches Lösemittelgemisch mit einem Siedebereich von 165 bis 185 Grad C) eingewogen.
Die Eigenschaften der resultierenden Bindemittel-Komponenten A und V (Vergleich) sind in Tabelle 2 dargestellt.

### 3. Herstellung der Beschichtungsmittel enthaltend die Bindemittel gemäß Beispiel 2

### 3.1. Herstellung einer Härterlösung

Aus den nachfolgend angegebenen Komponenten wird durch Mischen eine Härterlösung hergestellt:

| | |
|---|---|
| Butylacetat 98% | 1,5 Teile |
| Xylol | 7,5 Teile |
| Butylglykolacetat | 11,0 Teile |
| Katalysatorlösung[1)] | 4,0 Teile |

1) unter Punkt 3.3 beschriebene Katalysatorlösung

(fortgesetzt)

| | |
|---|---|
| Desmodur® N 3390[2) ] | 50,6 Teile |
| Solventnaphtha® | 10,0 Teile |
| Baysilon® Lackadditiv OL44[3)] | 0,6 Teile |
| 1-Methoxypropylacetat-2 | 14,0 Teile |

2) Handelsübliches Polyisocyanat der Firma Bayer AG, eine 90 %ige Lösung in Butylacetat/Solventnaphtha 1:1 auf Basis eines Hexamethylendiisocyanattrimerisats mit mit einem zahlenmittleren Molekulargewicht Mn von ca. 700 Dalton, einer mittleren Funktionalität zwischen 3 und 4 und einem Uretdiongruppengehalt zwischen 0 und 5 Gew.-%

3) Handelsübliches Verlaufsmittel auf Basis eines polyethermodifizierten Methylpolysiloxans der Firma Bayer AG

### 3.2. Herstellung eines Einstellzusatzes

Aus den nachfolgend angegebenen Komponenten wird durch Mischen ein Einstellzusatz hergestellt:

| | |
|---|---|
| Xylol | 15,0 Teile |
| Solventnaphta® | 13,0 Teile |
| Benzin 135/180 | 10,0 Teile |
| Butylgykolacetat | 3,0 Teile |
| Butylacetat (98/100) | 50,0 Teile |
| 1-Methoxypropylacetat-2 | 5,0 Teile |
| Butoxyl | 2,0 Teile |
| Dipentene | 2,0 Teile |

### 3.3. Herstellung einer Katalysatorlösung

1,0 Teile Dibutylzinndilaurat werden mit 50,0 Teilen Butylacetat 98/100 und 49,0 Teilen Xylol gemischt.

### 3.4. Herstellung der Klarlacklösungen KA und KV (Vergleichsbeispiel)

Aus den in Tabelle 3 angegebenen Komponenten werden die Klarlacklösungen KA (erfindungsgemäß) und KV (Vergleich) durch Vermischen hergestellt.

### 3.5. Herstellung der transparenten Decklacke KA' und KV' (Vergleichsbeispiel)

Die transparenten Decklacke KA' und KV' werden dadurch hergestellt, daß jeweils 100 Volumenteile der Klarlacklösungen KA bzw. KV mit 50 Volumenteilen der oben beschriebenen Härterlösung (Beispiel 3.1) und 10 Volumenteilen des oben beschriebenen Einstellzusatzes (Beispiel 3.2) gemischt werden.

Der so erhaltene Lack wird dann auf phosphatierte und beschichtete Stahlbleche appliziert. Die phosphatierten Stahlbleche werden hierzu mit einem handelsüblichen konventionellen Füller (Handelsprodukt Glasurit Grundfüller EP 801-1552 der Firma Glasurit GmbH, Münster, mit einem epoxifunktionellen Bindemittel und einem aminofunktionellen Härter) mittels Spritzauftrag beschichtet (Trockenfilmschichtdicke ca. 40 bis 60 µm), 45 min bei 80 Grad C und 16 h bei Raumtemperatur getrocknet und mit Schleifpapier P800 und Excenterschleifer naß geschliffen. Anschließend wird ein Basislack aus einer Mischung aus 80 Teilen eines handelsüblichen konventionellen Metallic-Basislackes (Handelsprodukt Basislack AE 54M 99/9 Basisfarbe Aluminium superfein der Firma Glasurit GmbH, Münster) auf Basis eines hydroxylgruppenhaltigen Polyesters, Celluloseacetobutyrat, Wachs und eines Melaminharzes und 20 Teilen eines weiteren handelsüblichen konventionellen Basislackes (Handelsprodukt Basislack AE 54M 552 Basisfarbe Helioblau der Firma Glasurit GmbH, Münster) auf Basis eines hydroxylgruppenhaltigen Polyesters, Celluloseacetobutyrat, Wachs und eines Melaminharzes aufgebracht, indem zunächst ein Spritzgang aufgetragen wird und nach einer Zwischenablüftzeit von 5 min ein zweiter Spritzgang aufgebracht wird (Spritzdruck jeweils 4 bis 5 bar). Die Trockenfilmschichtdicke des Basislackes beträgt ca. 20 µm. Nach einer Ablüftzeit von 30 min. wird der Klarlack appliziert, indem zunächst ein Spritzgang aufgetragen wird und nach einer Zwischenablüftzeit von 3 min ein zweiter Spritzgang aufgebracht wird (Spritzdruck jeweils 4 bis 5 bar). Die Tafeln werden dann je nach durchgeführter Prüfung unter verschiedenen Bedingungen getrocknet. Die Trockenfilmschichtdicke des Klarlackes beträgt ca. 50 bis 80 µm.

Die Ergebnisse der Prüfung der resultierenden Beschichtungen sind in der Tabelle 4 dargestellt.

Tabelle 1:

| Zusammensetzung der Komponenten A und V | | |
|---|---|---|
| **Bestandteile des Bindemittels** | **A** | **V** |
| A11 (Polyester gemäß Beisp. 1.1) | 6,69 | |
| A12 (Polyester gemäß Beisp. 1.2) | | 7,79 |
| Shellsol A | 17,69 | 18,51 |
| | | |
| Styrol | 11,99 | 12,08 |
| n-Butylmethacrylat | 3,13 | 3,15 |
| t-Butylcyclohexylacrylat | 7,31 | 7,35 |
| Methylmethacrylat | 8,89 | 11,03 |
| Hydroxy-n-propylacrylat 25 Gew-% 3-Hydoxy-/75 Gew.-% 2-Hydroxy-n-propylacrylat | 18,79 | 18,91 |
| Hexandioldiacrylat | 2,09 | - |
| Mercaptoethanol | 0,254 | 0,26 |
| Triisodecylphosphit | 0,135 | 0,14 |

Tabelle 2:

| Eigenschaften der Komponenten A und V | | |
|---|---|---|
| | **A(1)** | **V1** |
| OH-Zahl [mg KOH/g] | 130 | 134 |
| Säurezahl [mg KOH/g] | 2,8 | 2,3 |
| Festkörper [%] | 59,4 | 61,3 |
| Viskosität[1)] [dPas] | 1,7 | 2,5 |

1) Viskosität einer 50 %-igen Lösung des Acrylatharzes in Butylacetat bei 23 Grad C

Tabelle 3:

| Zusammensetzung der Klarlacklösungen in Gewichtsteilen | | |
|---|---|---|
| Klarlacklösung | KA | KV |
| | | |
| A[1)] | 87,0 | - |
| V1[1)] | - | 87,0 |
| LS1[2)] | 0,9 | 0,9 |
| LS2[3)] | 0,9 | 0,9 |
| DBTL[4)] | 2,0 | 2,0 |
| VLM[5)] | 3,8 | 3,8 |

Erläuterungen zu Tabelle 3
1) in Tabelle 1 beschriebene Lösungen der Bindemittel-Komponenten A (erfindungsgemäß) und V (Vergleich), die aber alle mit Butylacetat einheitlich auf einen Festkörpergehalt von 58 % eingestellt wurden
2) Tinuvin® 292 der Firma Ciba Geigy, handelsübliches Lichtschutzmittel auf Basis eines sterisch gehinderten Amins (HALS)
3) Tinuvin® 1130 der Firma Ciba Geigy, handeslübliches Lichtschutzmittel auf Basis Benztriazol
4) Katalysatorlösung gemäß Beispiel 3.3
5) Verlaufsmittellösung gemäß Beispiel 3.4

Tabelle 3: (fortgesetzt)

| Zusammensetzung der Klarlacklösungen in Gewichtsteilen | | |
|---|---|---|
| Klarlacklösung | KA | KV |
| BGA[6)] | 2,4 | 2,4 |
| BA[7)] | 3,0 | 3,0 |
| FK(%)[8)] | 52,2 | 52,2 |

6) Butylglykolacetat
7) Butylacetat 98 %ig
8) Festkörper

Tabelle 4:

| Prüfergebnisse der applizierten Decklacke KA' (erfindungsgemäß) und KV' (Vergleich) | | |
|---|---|---|
| appl. Decklack | KA' | KV' |
| | | |
| Haftung | 16 | 20 |
| | | |
| Viskosität (s) | 20 | 20 |
| | | |
| nach 2h | 29 | 27 |
| | | |
| Staubfrei (min) | 90 | 110 |
| | | |
| Klebfrei (min) | 240 | 290 |
| | | |
| Benzintest (Tage) | 8 | 16 |
| | | |
| Volvotest | m0/g0 | m0/g0 |
| | | |
| **Farbton** (Vergleich) | | |
| | | |
| Aufsicht | gleich | gleich |
| | | |
| Schrägs. | gleich | gleich |
| | | |
| Beurteilung | in Ordn. | in Ordn. |

**Erläuterungen zu Tabelle 4**

Die in der Tabelle 4 angeführten Prüfungen werden folgendermaßen durchgeführt:

**Haftung: Prüfung mit dem Hochdruckreiniger:**

Hochdruckreiniger
80 bar Druck
Durchlaufmenge 800l/h
Temperatur:Kalt
Abstand der Düse zur Testtafel:5cm

Der Testlack wird auf ein 40x60cm Stahlblech wie in Beispiel 3.5 beschrieben appliziert und 30 min bei 60 Grad C getrocknet. Nach 7 Tagen Lagerung bei Raumtemperatur wird mit einem Messer ein Dreieck mit 10 cm Seitenlänge durch die Lackschichten geschnitten. Der Schnitt muß bis zum Substrat erfolgen. Anschließend werden die Seiten des Dreiecks mit dem Hochdruckreinigerstrahl jeweils 10 s belastet.
Auswertung: Über das Dreieck wird ein quadratisch geschnittenes Metallgitter mit 1/2 Zoll (1,3 cm) Maschenweite und insgesamt 6 Zoll (15,4 cm) Kantenlänge gelegt (144 Quadrate). Jedes Quadrat, in dem ein Haftungsverlust zwischen Klarlack und Basislack vorkommt, wird gezählt.

**Viskosität:**

Die Viskosität wird jeweils als Auslaufzeit im DIN 4-Becher bei 20 Grad C gemessen.

**Staubfreiheit:**

Ca. 15 Minuten nach dem Aufspritzen des Lackes wird die Tafel an einer Ecke mit einer kleinen Probe Seesand (3 bis 4 g) bestreut. Die Tafel wird dann aus einer Höhe von 30 cm mit der Kante aufgestoßen (freier Fall). Staubfreiheit ist erreicht, wenn keine Sandanhaftung vorliegt. Die Prüfung wird nach jeweils 15 Minuten wiederholt, kurz vor Erreichen der Staubfreiheit wird das Wiederholungsintervall auf 5 Minuten verkürzt.

**Klebfreiheit:**

Ca. 20 Minuten nach Erreichen der Staubfreiheit wird die lackierte Tafel mit einem ca. $3cm^2$ Blättchen Papier belegt. Auf dieses Papier wird eine kleine Platte aus Hartkunstoff gelegt, auf das dann ein Gewicht von 100g aufgelegt wird. Nach genau 1 Minute wird wie beim Test auf Staubfreiheit geprüft, ob das Papier noch anhaftet. Die Prüfung wird nach jeweils 15 Minuten wiederholt, kurz vor Erreichen der Klebfreiheit wird das Wiederholungsintervall auf 5 Minuten verkürzt

**Benzintest:**

Wie oben beschrieben, wird der Klarlack auf phosphatierte, beschichtete Stahlbleche, die mit dem oben beschriebenen Füller und Basislack beschichtet sind, appliziert und bei Raumtemperatur getrocknet. Nach 24-stündiger Lagerung bei Raumtemperatur wird erstmals die Benzinfestigkeit geprüft.
Durchführung: Ein mit 1 ml Superbenzin (bleifrei) getränktes Wattepad (Filtergrad, Typ T950, Größe 2,3 der Firma Seitz), das auf der Unterseite eine gitterförmige Struktur besitzt, wird auf die Lackschicht gelegt und mit einem 100 g Gewicht 5 Minuten belastet. Danach wird die durch die Anguellung der Lackoberfläche hervorgerufene Struktur visuell beurteilt: nicht markiert, markiert, sehr leicht markiert, leicht markiert, markiert, stark markiert, sehr stark markiert. Angegeben ist die Zeitdauer der Lagerung bei Raumtemperatur in Tagen, nach denen der Benzintest in Ordnung ist, d.h. keine Markierung sichtbar ist.

**Volvo Test:**

Prüfbedingungen 1 Cyclus:

4h bei 50 Grad C im Ofen
2h bei 35 Grad C und 95-100 % rel. Luftfeuchte
2h bei 35 Grad 95-100 % rel. Luftfeuchte und 21 Schwefeldioxid
16h bei -30 Grad Tiefkühlschrank
Tafel mit Wasser waschen und trocknen

Auswertung:

Blasengrad nach DIN 53209
Risse ASTM D660

**Farbton nach DIN6174:**

Normlichtart D
3 Winkelmeßgerät MMK111, Fa. Datacolor

Als Basisfarbe wurde eine Mischung der handelsüblichen Basisfarben der Fa. BASF L+F, (Münster-Hiltrup, Deutschland) der Reihe 54 verwandt. Zum Einsatz kam eine Mischung von 80 Gew. Teilen 54M 99/9 Basisfarbe Aluminium superfein und 20 Gew. Teilen 54M 552 Basisfarbe Helioblau. Der Testlack wird auf ein 40x60cm Stahlblech wie unter Punkt II.6. beschrieben appliziert und 30 Minuten bei 60 Grad C getrocknet. Nach 24 Stunden Lagerung bei Raumtemperatur wird die Farbtonprüfung durchgeführt.
Die Tafeln werden unter einer Neonlampe Osram Universal weiß ausgewertet:

1. Aufsicht: Die Tafeln werden im Winkel von ca. 20 Grad zur Senkrechten mit der Standardtafel (beschichtet mit dem Klarlack KA oder KV) verglichen.

2. Schrägsicht: Die Tafeln werden im Winkel von ca. 70 Grad zur Senkrechten mit der Standardtafel (beschichtet mit dem Klarlack KA oder KV) verglichen.

Bewertung:

Der Hell/Dunkelwechsel zwischen Aufsicht und Schrägsicht sollte möglichst ausgeprägt sein. Die Aufsicht ist in Ordnung, wenn die Tafel mit dem Testklarlack die gleiche oder eine größere Helligkeit wie die Standardtafel aufweist. Die Schrägsicht ist in Ordnung, wenn die Tafel mit dem Testlack die gleiche oder eine geringere Helligkeit wie die Standardtafel aufweist.

## Patentansprüche

**1.** Beschichtungsmittel, enthaltend mindestens eine hydroxylgruppenhaltige Bindemittel-Komponente (A), bestehend aus:

(A1) 5 bis 60 Gew.-% mindestens eines Polyesters und
(A2) 40 bis 95 Gew.-% mindestens eines Polyacrylats, das zumindest teilweise in Gegenwart des Polyesters (A1) hergestellt worden ist
und enthaltend
(B) mindestens ein Vernetzungsmittel,

**dadurch gekennzeichnet, daß** die Komponente (A2) erhältlich ist aus den Monomereinheiten:

(a) einem cycloaliphatischen Ester der Methacrylsäure und/oder Acrylsäure oder einem Gemisch aus solchen Monomeren,

(b) einem hydroxylgruppenhaltigen Alkylester der Methacrylsäure und/oder Acrylsäure oder Gemischen aus solchen Monomeren,

(c) einem von (a) und (b) verschiedenen Monomeren mit mindestens zwei polymerisierbaren, olefinisch ungesättigten Doppelbindungen oder einem Gemisch aus solchen Monomeren,

(d) gegebenenfalls einem von (a), (b) und (c) verschiedenen hydroxylgruppenhaltigen, ethylenisch ungesättigten Monomeren oder einem Gemisch aus solchen Monomeren,

(e) einem von (a), (b), (c) und (d) verschiedenen aliphatischen Ester der Methacryl- und/oder Acrylsäure oder einem Gemisch aus solchen Monomeren,

(f) gegebenenfalls einem von (a), (b), (c), (d) und (e) verschiedenen vinylaromatischen Kohlenwasserstoff oder einem Gemisch aus solchen Monomeren und

(g) gegebenenfalls einem von (a), (b), (c), (d), (e) und (f) verschiedenen weiteren ethylenisch ungesättigten Monomeren oder einem Gemisch aus solchen Monomeren.

**2.** Beschichtungsmittel nach Anspruch 1,
**dadurch gekennzeichnet, daß** die Monomerkomponenten des Polyacrylats (A2) in Mengen von:

(a) 5 bis 80 Gew.-% der Komponente (a),
(b) 10 bis 50 Gew.-% der Komponente (b),
(c) 1 bis 25 Gew.-% der Komponente (c),
(d) 0 bis 25 Gew.-% der Komponente (d),
(e) 5 bis 80 Gew.-% der Komponente (e),
(f) 0 bis 40 Gew.-% der Komponente (f) und
(g) 0 bis 40 Gew.-% der Komponente (g)

zu einem Polyacrylatharz (A2) mit einer OH-Zahl von 60 bis 180 mg KOH/g polymerisiert werden, wobei die Summe der Gewichtsanteile der Komponenten (a) bis (g) stets 100 Gew.-% beträgt.

**3.** Beschichtungsmittel nach einem der Ansprüche 1 oder 2, **dadurch gekennzeichnet,**
**daß** als Komponente (b) nur Monomere oder Mischungen von Monomeren eingesetzt werden, die bei alleiniger Polymerisation des jeweiligen Monomers ein Polyacrylatund/oder Polymethacrylatharz mit einer Glasübergangstemperatur von -10 bis +6 Grad C oder von +60 bis 80 Grad C ergeben.

**4.** Beschichtungsmittel nach einem der Ansprüche 1 bis 3,
**dadurch gekennzeichnet,**
**daß** die Komponente (b) ausgewählt ist aus 3-Hydroxypropylmethacrylat, 3-Hydroxypropylacrylat, 2-Hydroxypropylmethacralat und/oder 2-Hydroxypropylacrylat.

**5.** Beschichtungsmittel nach einem der Ansprüche 1 bis 4,
**dadurch gekennzeichnet,**
**daß** als Komponente (c) eine Verbindung der Formel I eingesetzt wird:

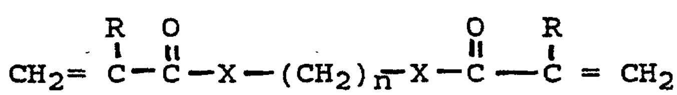
(I)

mit:

R für H oder Methyl,
X für O, NH, $NR_1$ mit $R_1$=C1- bis C10-Alkyl,
oder S und
n für 2 bis 8.

**6.** Beschichtungsmittel nach einem der Ansprüche 1 bis 5,
**dadurch gekennzeichnet,**
**daß** die Komponente (e) so ausgewählt wird, daß bei alleiniger Polymerisation der Komponente (e) ein Polyacrylat- und/oder Polymethacrylatharz mit einer Glasübergangstemperatur von -70 bis +120 Grad C erhalten wird.

**7.** Beschichtungsmittel nach einem der Ansprüche 1 bis 6,
**dadurch gekennzeichnet,**
**daß** die Komponente (e) ausgewählt ist aus n-Butylmethacrylat, n-Butylacrylat, tert.-Butylmethacrylat, tert.-Butylacrylat, iso-Butylmethacrylat, iso-Butylacrylat, Methylmethacrylat, Methylacrylat, 2-Ethylhexylmethacrylat, 2-Ethylhexylacrylat, Laurylmethacrylat, Laurylacrylat, Stearylmethacrylat, Stearylacrylat, Ethyltriglykolmethacrylat, Furfurylmethacrylat und Furfurylacrylat.

**8.** Beschichtungsmittel nach einem der Ansprüche 1 bis 7,
**dadurch gekennzeichnet,**
**daß** die Komponente (a) ausgewählt ist aus Cyclohexylmethacrylat, Cyclohexylacrylat, Isobornylmethacrylat, Isobornylacrylat, 4-tert.-Butylcyclohexylacrylat und/oder 4-tert.-Butylcyclohexylmethacrylat und bevorzugt ausgewählt ist aus 4-tert.-Butylcyclohexylacrylat und/oder 4-tert.-Butylcyclohexylmethacrylat.

**9.** Beschichtungsmittel nach einem der Ansprüche 1 bis 8,
**dadurch gekennzeichnet,**
**daß** das Acrylatharz (A2) erhältlich ist durch Polymerisation von:

(a) 5 bis 30 Gew.-% der Komponente (a),
(b) 15 bis 40 Gew.-% der Komponente (b),
(c) 2 bis 20 Gew.-% der Komponente (c),
(d) 0 bis 15 Gew.-% der Komponente (d),
(e) 5 bis 30 Gew.-% der Komponente (e),
(f) 10 bis 30 Gew.-% der Komponente (f) und
(g) 0 bis 30 Gew.-% der Komponente (g),

wobei die Summe der Gewichtsanteile der Komponenten (a) bis (g) stets 100 Gew.-% beträgt.

**10.** Beschichtungsmittel nach einem der Ansprüche 1 bis 9,
**dadurch gekennzeichnet,**
**daß** das Polyacrylatharz (A) eine OH-Zahl 100 bis 150 mg KOH/g aufweist.

**11.** Beschichtungsmittel nach einem der Ansprüche 1 bis 10,
**dadurch gekennzeichnet,**
**daß** der Polyester (A1) eine OH-Zahl von 90 bis 130, eine Säurezahl von weniger als 30 mg KOH/g und ein zahlenmittleres Molekulargewicht Mn von 1000 bis 3500 Dalton aufweist.

**12.** Beschichtungsmittel nach einem der Ansprüche 1 bis 11,
**dadurch gekennzeichnet,**
**daß** der Komponente (A) nach ihrer Herstellung oder dem Beschichtungsmittel 0,1 bis 1 Gew.-%, bezogen auf das Gewicht der Komponente (A) ohne Lösemittel, mindestens einer aromatischen Mono- und/oder Polycarbonsäure und/oder eines Anhydrids einer aromatischen Carbonsäure zugesetzt wird.

**13.** Beschichtungsmittel nach einem der Ansprüche 1 bis 12,
**dadurch gekennzeichnet,**
**daß** mindestens 40 Gew.-% der Komponente (A2) in Gegenwart der Komponente (A1) hergestellt worden sind.

**14.** Beschichtungsmittel nach einem der Ansprüche 1 bis 13,
**dadurch gekennzeichnet,**
**daß** das Beschichtungsmittel als Vernetzungsmittel (B) mindestens ein Di- und/oder Polyisocyanat, bevorzugt mindestens ein isocyanuratgruppenhaltiges Di- und/oder Polyisocyanat, enthält.

**15.** Beschichtungsmittel nach einem der Ansprüche 1 bis 14, **dadurch gekennzeichnet,**
**daß** es mindestens ein weiteres, von der Komponente (A) verschiedenes Bindemittel, bevorzugt mindestens ein von (A2) verschiedenes weiteres Polyacrylatharz und/oder mindestens ein von (A1) verschiedenes Polykondensationsharz enthält.

**16.** Verfahren zur Herstellung eines mehrschichtigen schützenden und/oder dekorativen Überzuges auf einer Substratoberfläche, bei dem

(1) ein pigmentierter Basislack auf die Substratoberfläche aufgebracht wird,
(2) aus dem in Stufe (1) aufgebrachten Basislack ein Polymerfilm gebildet wird,

(3) auf die so erhaltene Basisschicht ein transparenter Decklack aufgebracht wird, der die erfindungsgemäße Bindemittel-Komponente (A) und ein Vernetzungsmittel (B) enthält, aufgebracht wird und anschließend
(4) Basislackschicht und Decklackschicht zusammen gehärtet werden.

**17.** Verwendung der Beschichtungsmittel nach einem der Ansprüche 1 bis 15 als Decklack.

**18.** Verwendung der Beschichtungsmittel nach einem der Ansprüche 1 bis 15 für die Reparaturlackierung, insbesondere für den Bereich der Autoreparaturlackierung.

**Claims**

**1.** Coating composition comprising at least one hydroxyl-containing binder component (A) consisting of:

(A1) from 5 to 60% by weight of at least one polyester and
(A2) from 40 to 95% by weight of at least one polyacrylate which has been prepared at least partially in the presence of the polyester (A1)
and comprising
(B) at least one crosslinking agent,

**characterized in that** component (A2) is obtainable from the monomer units:

(a) a cycloaliphatic ester of methacrylic acid and/or acrylic acid, or a mixture of such monomers,

(b) a hydroxyl-containing alkyl ester of methacrylic acid and/or acrylic acid, or mixtures of such monomers,

(c) a monomer which is different from (a) and (b) and has at least two polymerizable, olefinically unsaturated double bonds, or a mixture of such monomers

(d) optionally a hydroxyl-containing, ethylenically unsaturated monomer which is different from (a), (b) and (c), or a mixture of such monomers,

(e) an aliphatic ester of methacrylic and/or acrylic acid which is different from (a), (b), (c) and (d), or a mixture of such monomers,

(f) optionally a vinyl-aromatic hydrocarbon which is different from (a), (b), (c), (d) and (e), or a mixture of such monomers, and

(g) optionally a further ethylenically unsaturated monomer which is different from (a), (b), (c), (d), (e) and (f), or a mixture of such monomers.

**2.** Coating composition according to claim 1, **characterized in that** the monomer components of the polyacrylate (A2) are polymerized in quantities of:

(a) from 5 to 80% by weight of component (a),
(b) from 10 to 50% by weight of component (b),
(c) from 1 to 25% by weight of component (c),
(d) from 0 to 25% by weight of component (d),
(e) from 5 to 80% by weight of component (e),
(f) from 0 to 40% by weight of component (f) and
(g) from 0 to 40% by weight of component (g)

to give a polyacrylate resin (A2) having an OH number of from 60 to 180 mg of KOH/g, the sum of the proportions by weight of components (a) to (g) always being 100% by weight.

**3.** Coating composition according to one of claims 1 or 2, **characterized in that** the monomers or monomer mixtures employed as component (b) only are those which, on polymerization of the respective monomer alone, produce a polyacrylate resin and/or polymethacrylate resin having a glass transition temperature of from -10 to +6 degrees

C or from +60 to 80 degrees C.

4. Coating composition according to one of claims 1 to 3, **characterized in that** component (b) is selected from 3-hydroxypropyl methacrylate, 3-hydroxypropyl acrylate, 2-hydroxypropyl methacralate [sic] and/or 2-hydroxypropyl acrylate.

5. Coating composition according to one of claims 1 to 4, **characterized in that** as component (c) a compound of the formula I is employed:

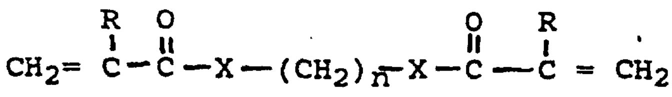
(I)

where:

R is H or methyl,
X is 0, NH, $NR_1$ where $R_1$=C1- to C10-alkyl, or S, and
n is 2 to 8.

6. Coating composition according to one of claims 1 to 5, **characterized in that** component (e) is selected such that polymerization of component (e) alone produces a polyacrylate resin and/or polymethacrylate resin having a glass transition temperature of from -70 to +120 degrees C.

7. Coating composition according to one of claims 1 to 6, **characterized in that** component (e) is selected from n-butyl methacrylate, n-butyl acrylate, tert-butyl methacrylate, tert-butyl acrylate, isobutyl methacrylate, isobutyl acrylate, methyl methacrylate, methyl acrylate, 2-ethylhexyl methacrylate, 2-ethylhexyl acrylate, lauryl methacrylate, lauryl acrylate, stearyl methacrylate, stearyl acrylate, ethyltriglycol methacrylate, furfuryl methacrylate and furfuryl acrylate.

8. Coating composition according to one of claims 1 to 7, **characterized in that** component (a) is selected from cyclohexyl methacrylate, cyclohexyl acrylate, isobornyl methacrylate, isobornyl acrylate, 4-tert-butylcyclohexyl acrylate and/or 4-tert-butylcyclohexyl methacrylate and is preferably selected from 4-tert-butylcyclohexyl acrylate and/or 4-tert-butylcyclohexyl methacrylate.

9. Coating composition according to one of claims 1 to 8, **characterized in that** the acrylate resin (A2) is obtainable by polymerizing:

(a) from 5 to 30% by weight of component (a),
(b) from 15 to 40% by weight of component (b),
(c) from 2 to 20% by weight of component (c),
(d) from 0 to 15% by weight of component (d),
(e) from 5 to 30% by weight of component (e),
(f) from 10 to 30% by weight of component (f) and
(g) from 0 to 30% by weight of component (g),

the sum of the proportions by weight of components (a) to (g) being always 100% by weight.

10. Coating composition according to one of claims 1 to 9, **characterized in that** the polyacrylate resin (A) has an OH number of from 100 to 150 mg of KOH/g.

11. Coating composition according to one of claims 1 to 10, **characterized in that** the polyester (A1) has an OH number of from 90 to 130, an acid number of less than 30 mg of KOH/g and a number-average molecular weight Mn of from 1000 to 3500 daltons.

12. Coating composition according to one of claims 1 to 11, **characterized in that** from 0.1 to 1% by weight, based on the weight of component (A) without solvents, of at least one aromatic mono-and/or polycarboxylic acid and/or of an anhydride of an aromatic carboxylic acid is added to component (A) following its preparation or to the

coating composition.

**13.** Coating composition according to one of claims 1 to 12, **characterized in that** at least 40% by weight of component (A2) has been prepared in the presence of component (A1).

**14.** Coating composition according to one of claims 1 to 13, **characterized in that** the coating composition contains as crosslinking agent (B) at least one di- and/or polyisocyanate, preferably at least one di- and/or polyisocyanate which contains isocyanurate groups.

**15.** Coating composition according to one of claims 1 to 14, **characterized in that** it contains at least one further binder which is different from component (A), preferably at least one further polyacrylate resin which is different from (A2) and/or at least one polycondensation resin which is different from (A1).

**16.** Process for the production of a multicoat protective and/or decorative coating on a substrate surface, in which

(1) a pigmented basecoat is applied to the substrate surface,
(2) a polymer film is formed from the basecoat applied in stage (1),
(3) to the basecoat thus obtained there is applied a transparent topcoat containing the novel binder component (A) and a crosslinking agent (B), and subsequently
(4) basecoat film and topcoat film are cured together.

**17.** Use of the coating compositions according to one of claims 1 to 15 as topcoat.

**18.** Use of the coating compositions according to one of claims 1 to 15 for repair coating, especially for the sector of automotive refinishing.

## Revendications

**1.** Composition de revêtement comprenant au moins un composant liant (A) renfermant des groupes hydroxy, constitué de:

(A1) de 5 à 60 % en poids d'au moins un polyester et
(A2) de 40 à 95 % en poids d'au moins un polyacrylate qui a été préparé, au moins en partie, en présence du polyester (A1)
et comprenant
(B) au moins un agent de, réticulation,

**caractérisée en ce que** le composant (A2) peut être obtenu à partir des motifs monomères:

(a) un ester cycloaliphatique de l'acide méthacrylique et/ou de l'acide acrylique ou un mélange de tels monomères,

(b) un ester alkylique renfermant des groupes hydroxy de l'acide méthacrylique et/ou de l'acide acrylique ou des mélanges de tels monomères,

(c) un monomère différent de (a) et (b), renfermant au moins deux doubles liaisons polymérisables, oléfiniquement insaturées, ou un mélange de tels monomères,

(d) éventuellement un monomère éthyléniquement insaturé renfermant des groupes hydroxy, différent de (a), (b) et (c), ou un mélange de tels monomères,

(e) un ester aliphatique de l'acide méthacrylique et/ou de l'acide acrylique, différent de (a), (b), (c) et (d), ou un mélange de tels monomères,

(f) éventuellement un hydrocarbure vinylaromatique différent de (a), (b), (c), (d) et (e), ou un mélange de tels monomères et

(g) éventuellement un autre monomère éthyléniquement insaturé différent de (a), (b), (c), (d), (e) et (f), ou un mélange de tels monomères.

**2.** Composition de revêtement selon la revendication 1, **caractérisée en ce que** les composants monomères du polyacrylate (A2) sont polymérisés en quantités de:

(a) de 5 à 80 % en poids du composant (a),
(b) de 10 à 50 % en poids du composant (b),
(c) de 1 à 25 % en poids du composant (c),
(d) de 0 à 25 % en poids du composant (d),
(e) de 5 à 80 % en poids du composant (e),
(f) de 0 à 40 % en poids du composant (f) et
(g) de 0 à 40 % en poids du composant (g)

pour donner lieu à une résine de polyacrylate (A2) présentant un indice OH de 60 à 180 mg KOH/g, la somme des proportions pondérales des composants (a) à (g) étant toujours de 100 % en poids.

**3.** Composition de revêtement selon l'une quelconque des revendications 1 ou 2, **caractérisée en ce que** l'on utilise en tant que composant (b), uniquement des monomères ou des mélanges de monomères qui produisent, lors de la polymérisation du monomère respectif seule, une résine de polyacrylate et/ou une résine de polyméthacrylate présentant une température de transition vitreuse de -10 à +6 degrés C ou de +60 à 80 degrés C.

**4.** Composition de revêtement selon l'une quelconque des revendications 1 à 3, **caractérisée en ce que** le composant (b) est choisi parmi le méthacrylate de 3-hydroxypropyle, l'acrylate de 3-hydroxypropyle, le méthacrylate de 2-hydroxypropyle et/ou l'acrylate de 2-hydroxypropyle.

**5.** Composition de revêtement selon l'une quelconque des revendications 1 à 4, **caractérisée en ce que** l'on utilise en tant que composant (c), un composé de formule I:

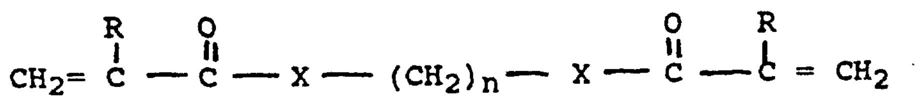

(I)

dans laquelle:

R représente H ou un méthyle,
X représente O, NH, $NR_1$ où $R_1$ représente un alkyle en C1 à C10,
ou S et
n vaut de 2 à 8.

**6.** Composition de revêtement selon l'une quelconque des revendications 1 à 5, **caractérisée en ce que** le composant (e) est choisi de telle sorte que, lors de la polymérisation du composant (e) seule, on obtienne une résine de polyacrylate et/ou une résine de polyméthacrylate présentant une température de transition vitreuse de -70 à +120 degrés C.

**7.** Composition de revêtement selon l'une quelconque des revendications 1 à 6, **caractérisée en ce que** le composant (e) est choisi parmi le méthacrylate de n-butyle, l'acrylate de n-butyle, le méthacrylate de tert-butyle, l'acrylate de tert-butyle, le méthacrylate d'isobutyle, l'acrylate d'isobutyle, le méthacrylate de méthyle, l'acrylate de méthyle, le méthacrylate de 2-éthylhexyle, l'acrylate de 2-éthylhexyle, le méthacrylate de lauryle, l'acrylate de lauryle, le méthacrylate de stéaryle, l'acrylate de stéaryle, le méthacrylate d'éthyltriglycol, le méthacrylate de furfuryle et l'acrylate de furfuryle.

**8.** Composition de revêtement selon l'une quelconque des revendications 1 à 7, **caractérisée en ce que** le composant (a) est choisi parmi le méthacrylate de cyclohexyle, l'acrylate de cyclohexyle, le méthacrylate d'isobornyle, l'acrylate d'isobornyle, l'acrylate de 4-tert-butylcyclohexyle et/ou le méthacrylate de 4-tert-butylcyclohexyle, et est de préférence choisi parmi l'acrylate de 4-tert-butylcyclohexyle et/ou le méthacrylate de 4-tert-butylcyclohexyle.

**9.** Composition de revêtement selon l'une quelconque des revendications 1 à 8, **caractérisée en ce que** la résine d'acrylate (A2) peut être obtenue par polymérisation de:

(a) de 5 à 30 % en poids du composant (a),
(b) de 15 à 40 % en poids du composant (b),
(c) de 2 à 20 % en poids du composant (c),
(d) de 0 à 15 % en poids du composant (d),
(e) de 5 à 30 % en poids du composant (e),
(f) de 10 à 30 % en poids du composant (f) et
(g) de 0 à 30 % en poids du composant (g),

la somme des proportions pondérales des composants (a) à (g) étant toujours de 100 % en poids.

**10.** Composition de revêtement selon l'une quelconque des revendications 1 à 9, **caractérisée en ce que** la résine de polyacrylate (A) présente un indice OH de 100 à 150 mg de KOH/g.

**11.** Composition de revêtement selon l'une quelconque des revendications 1 à 10, **caractérisée en ce que** le polyester (A1) présente un indice OH de 90 à 130, un indice d'acide inférieur à 30 mg de KOH/g et un poids moléculaire moyen en nombre Mn de 1000 à 3500 daltons.

**12.** Composition de revêtement selon l'une quelconque des revendications 1 à 11, **caractérisée en ce que** de 0,1 à 1 % en poids, par rapport au poids du composant (A) sans solvant, d'au moins un acide mono- et/ou polycarboxylique aromatique et/ou d'un anhydride d'un acide carboxylique aromatique est ajouté au composant (A) après sa préparation ou à la composition de revêtement.

**13.** Composition de revêtement selon l'une quelconque des revendications 1 à 12, **caractérisée en ce qu'**au moins 40 % en poids du composant (A2) ont été préparés en présence du composant (A1).

**14.** Composition de revêtement selon l'une quelconque des revendications 1 à 13, **caractérisée en ce que** la composition de revêtement comprend, en tant qu'agent de réticulation (B), au moins un diisocyanate et/ou un polyisocyanate, de préférence au moins un diisocyanate et/ou un polyisocyanate renfermant des groupes isocyanurate.

**15.** Composition de revêtement selon l'une quelconque des revendications 1 à 14, **caractérisée en ce qu'**elle comprend au moins un autre liant différent du composant (A), de préférence au moins une autre résine de polyacrylate différente de (A2) et/ou au moins une résine de polycondensation différente de (A1).

**16.** Procédé de production d'un revêtement multicouche protecteur et/ou décoratif sur une surface de substrat, dans lequel

(1) une couche de fond pigmentée est appliquée sur la surface de substrat,
(2) un film polymère est formé à partir de la couche de fond appliquée dans l'étape (1),
(3) une couche de finition transparente comprenant le composant liant (A) selon l'invention et un agent de réticulation (B) est appliquée sur la couche de fond ainsi obtenue, et ensuite
(4) le film de couche de fond et le film de couche de finition sont durcis conjointement.

**17.** Utilisation des compositions de revêtements selon l'une quelconque des revendications 1 à 15 en tant que couche de finition.

**18.** Utilisation des compositions de revêtements selon l'une quelconque des revendications 1 à 15 pour le revêtement de retouches, en particulier pour le domaine du revêtement de retouches d'automobiles.